# EUROPEAN PATENT SPECIFICATION

(11) **EP 1 598 402 B1**
(45) Date of publication and mention of the grant of the patent: **02.05.2012**
(21) Application number: 04711736.1
(22) Date of filing: 17.02.2004
(51) Int. Cl.: C08L 101/00, C08L 43/00, C08L 33/04

(54) **CURABLE COMPOSITIONS**
HÄRTBARE ZUSAMMENSETZUNGEN
COMPOSITIONS RETICULABLES

(30) Priority: 24.02.2003 JP 2003045603
(43) Date of publication of application: 23.11.2005
(73) Proprietor: KANEKA CORPORATION, Osaka-shi, Osaka 530-8288 (JP)
(72) Inventor: HASEGAWA, Nobuhiro, Osaka 566-0072 (JP); NAKAGAWA, Yoshiki, Osaka 566-0072 (JP)
(74) Representative: Hart-Davis, Jason
(86) International application number: PCT/JP2004/001743
(87) International publication number: WO 2004/074381

(56) References cited:
- JP-A- 2 296 871
- JP-A- 3 277 646
- JP-A- 5 140 248
- JP-A- 2000 143 853
- JP-A- 2000 154 255
- JP-A- 2000 154 347
- JP-A- 2000 154 370
- JP-A- 2001 011 319
- JP-A- 2001 089 676

## Description

### Technical Field

The present invention relates to curable compositions. More particularly, the invention relates to a curable composition containing the following two components: a vinyl polymer (I) which has at least one crosslinkable silyl group and whose main chain is produced by living radical polymerization and a vinyl polymer (II) which has a crosslinkable silyl group and whose main chain is produced by free radical polymerization wherein the weight ratio between the vinyl polymer (I) and the vinyl polymer (II) is 1:99 to 99:1; and relates to a curable composition containing the following two components: a vinyl polymer (III) which has a crosslinkable silyl group and exhibits a glass transition temperature of less than 23°C as determined with a differential scanning calorimeter (DSC) and a vinyl polymer (IV) which has a crosslinkable silyl group and exhibits a glass transition temperature of 23°C or more as determined with a differential scanning calorimeter.

### Background Art

As the functional group-containing curable composition, for example, moisture-curing liquid polymers which have crosslinkable silyl groups and whose main chain comprises a polysiloxane, a polyoxypropylene, or a polyisobutylene have been already known. However, with respect to curable compositions including such polymers, there are some issues that remain to be improved. In the polysiloxane-based composition, although excellent weatherability, heat resistance, low-temperature resistance, flexibility, etc. are exhibited, there remain problems with staining due to bleeding of the low-molecular component and paintability. In the polyoxypropylene-based composition, although excellent flexibility, paintability, and resistance to staining are exhibited, in some cases, weatherability is not sufficient. In the polyisobutylene-based composition, although the composition is characterized by its high weatherability and moisture permeation resistance, the viscosity is relatively high, which may result in a difficulty in handling, and some consideration is needed to produce a one-component product.

Furthermore, polymers having an alkenyl group as the functional group are also used as curable compositions. It is known that use of a hydrosilyl group-containing compound as a curing agent can provide cured objects that are excellent in heat resistance, durability, and curing properties in the inner regions. As the main chain of such an alkenyl group-containing polymer, various polymers are known, and examples thereof include polyether polymers, such as polyethylene oxide, polypropylene oxide, and polytetramethylene oxide; hydrocarbon polymers, such as polybutadiene, polyisoprene, polychloroprene, polyisobutylene, and hydrogenated products thereof; polyester polymers, such as polyethylene terephthalate, polybutylene terephthalate, and polycaprolactone; and silicone polymers, such as polydimethylsiloxane.

With respect to curable compositions including such polymers, there are also issues that remain to be improved. For example, in the polyether-based cured objects, depending on the application, heat resistance and weatherability may be insufficient. In the hydrocarbon-based cured objects, such as polybutadiene-based or polyisoprene-based cured objects, because of internal double bonds remaining in the main chain, depending on the application, heat resistance and weatherability may be slightly insufficient. In the polyisobutylene-based cured objects which do not contain internal double bonds, although excellent weatherability is exhibited, the viscosity is relatively high, in some cases resulting in a difficulty in handling. In the polyester-based cured objects, depending on the application, weatherability may be insufficient. In the silicone-based cured object, although exceptional weatherability, heat resistance, low-temperature resistance, and workability are exhibited, there remain problems in paint adhesion, staining properties, etc.

On the other hand, various types of functional group-containing vinyl polymers have been known. Examples of the synthetic process which have been disclosed include a process for synthesizing an alkenyl group-terminated (meth)acrylic polymer in which an alkenyl group-containing disulfide is used as a chain transfer agent (refer to Patent Document 1); a process in which a vinyl polymer having hydroxyl groups at both ends is synthesized using a hydroxyl group-containing disulfide, and then an alkenyl group-terminated (meth)acrylic polymer is produced through the reactivity of the hydroxyl groups (refer to Patent Document 2); and a process in which a vinyl polymer having hydroxyl groups at both ends is synthesized using a hydroxyl group-containing polysulfide, and then a silyl group-terminated (meth)acrylic polymer is synthesized through the reactivity of the hydroxyl groups (refer to Patent Document 3).

Furthermore, on the other hand, an acrylic rubber polymer into which an active chlorine group or an epoxy group is introduced has been used as an acrylic rubber composition for molding, and thereby molded objects having high heat resistance and oil resistance have been obtained. In order to meet the needs for further improvement in heat resistance, a technique for introducing a vinyl group-containing organosilicon group has been proposed (refer to Patent Document 4).

Curable compositions containing the polymers containing alkenyl groups or crosslinkable silyl groups at their side chains obtained by the processes described above are used for paint having high weatherability and the like.

In these processes, although polymers can be easily produced, it is difficult to ensure introduction of silicon groups at both ends of the polymers, and the cured objects therefrom have insufficient rubber properties, such as elongation. Thus, it has not been possible to obtain curable compositions having satisfactory characteristics. In order to ensure introduction of functional groups at both ends, a large amount of chain transfer agent must be used, giving rise to a problem in the production step. Furthermore, in these processes, since ordinary radical polymerization is used, it is difficult control the molecular weight and the molecular weight distribution (ratio of weight-average molecular weight to number-average molecular weight) of the resulting polymer.

If a vinyl polymer having a crosslinkable silyl group at its molecular end can be produced by a simple method, it is possible to obtain cured objects having physical properties that are superior to those of the polymer having a crosslinkable group at its side chain. Consequently, manufacturing methods heretofor have been studied by many researchers. However, it has not been easy to produce such a polymer on an industrial scale.

In order to overcome the problem described above, processes for producing functional group-terminated (meth)acrylic polymers have been developed. In particular, with respect to a polymer synthesized using living radical polymerization, the molecular weight and the molecular weight distribution can be freely controlled, and a functional group can be quantitatively introduced at its end. As a result, such a polymer has excellent weatherability, heat resistance, oil resistance, etc., and can be used for curable compositions having good mechanical properties that cannot be obtained by the polyether-based polymers, the hydrocarbon-based polymers, or the polyester-based polymers described above (refer to Patent Document 5).

However, with respect to the vinyl polymer synthesized using living radical polymerization, when the substituent at the side chain is large, even if the molecular weight is high, the molecular weight between crosslinking points of the resulting cured object is unexpectedly low and the number of intermolecular entanglements is low, which may result in a difficulty in obtaining physical properties of cured objects that are expected from the molecular weight. In such a case, considerable reinforcement may be necessary using a filler or the like.

In order to improve the strength of curable compositions containing functional group-containing polymers, several methods have been disclosed, for example, a method of blending with an epoxy resin and a method of blending with a polyether-based polymer (refer to Patent Document 6).

However, none of the disclosed documents described above makes reference to a curable composition containing a vinyl polymer which has at least one crosslinkable silyl group and whose main chain is produced by living radical polymerization and a vinyl polymer which has a crosslinkable silyl group and whose main chain is produced by free radical polymerization or a curable composition containing a vinyl polymer which has a crosslinkable silyl group and exhibits a glass transition temperature of less than 23°C as determined with a differential scanning calorimeter and a vinyl polymer which has a crosslinkable silyl group and exhibits a glass transition temperature of 23°C or more as determined with a differential scanning calorimeter, which is disclosed in the present invention. Furthermore, none provides solutions for improvement in strength after the composition is cured.
[Patent Document 1]
   Japanese Unexamined Patent Application Publication Nos. 01-247403 and 05-255415
[Patent Document 2]
   Japanese Unexamined Patent Application Publication No. 05-262808
[Patent Document 3]
   Japanese Unexamined Patent Application Publication No. 05-211922
[Patent Document 4]
   Japanese Unexamined Patent Application Publication No. 61-127711 and Japanese Examined Patent Application Publication No. 02-001859
[Patent Document 5]
   Japanese Unexamined Patent Application Publication Nos. 09-272714, 11-005815, 11-043512, 11-080571, 11-116617, 11-130931, 12-086999, 12-191912, 2000-038404, 2000-044626, and 2000-072804
[Patent Document 6]
   Japanese Unexamined Patent Application Publication Nos. 11-100433 and 11-116763

JP-2001-011319 discloses curable compositions comprising both: (I) a vinyl polymer, particularly, a (meth)acrylic polymer having a cross-linkable functional group such as a cross-linkable silyl group; and (II) a saturated hydrocarbon polymer such as a polyisobutylene, having a cross-linkable functional group, such as a cross-linkable silyl group. Component (I) is obtained by living radical polymerisation, and component (II) may preferably be obtained by living cationic polymerisation.

JP-02-296871 discloses curable compositions comprising two silyl group-containing vinyl polymers where the two polymers have glass transition temperatures separated by at least 20°C

JP-05-140248 discloses curable compositions comprising: (A) a vinyl polymer having a hydrolysable silyl group; (B) a modified soft resin obtained by polymerizing a macromonomer soft resin with a Tg of 0°C or below and having terminal free C=C bonds, with a vinyl monomer having a hydrolysable silyl group and a vinyl monomer having no hydrolysable silyl group; and (C) a curing catalyst.

### Disclosure of Invention

It is an object of the present invention to provide a well-balanced curable composition in which characteristics of both an existing polymer produced by free radical polymerization and an existing polymer produced by living radical polymerization are exploited, for example, in such a manner that while using vinyl polymers which generally have excellent weatherability, heat resistance, oil resistance, etc., high strength is maintained without losing and by taking advantage of rubber elasticity.

The present inventors have conducted intensive research to solve the problems described above and, as a result, have achieved the present invention.

The present invention relates to a curable composition containing the following two components: a vinyl polymer (I) which has at least one crosslinkable silyl group and whose main chain is produced by living radical polymerization and a vinyl polymer (II) which has a crosslinkable silyl group and whose main chain is produced by free radical polymerization and wherein the weight ratio between the vinyl polymer (I) and the vinyl polymer (II) is 1:99 to 99:1.

Preferably, the vinyl polymer (I) of the present invention has a molecular weight distribution of less than 1.8. Preferably, the main chain of the vinyl polymer (I) of the present invention is produced by polymerizing a monomer selected from the group consisting of (meth)acrylic monomers, acrylonitrile monomers, aromatic vinyl monomers, fluorine-containing vinyl monomers, and silicon-containing vinyl monomers. More preferably, the main chain of the vinyl polymer (I) is a (meth)acrylic polymer. Still more preferably, the main chain of the vinyl polymer (I) is an acrylic polymer. Particularly preferably, the main chain of the vinyl polymer (I) is an acrylate polymer.

The living radical polymerization, i.e., the method for producing the main chain of the vinyl polymer (I) of the present invention, is preferably atom transfer radical polymerization. The atom transfer radical polymerization is preferably carried out using, as a catalyst, a transition metal complex with an element selected from Groups 7, 8, 9, 10, and 11 of the periodic table as a central metal. The transition metal complex is more preferably selected from the group consisting of copper complexes, nickel complexes, ruthenium complexes, and iron complexes. The metal complex used as the catalyst is still more preferably a copper complex.

In the present invention, the crosslinkable silyl group of the vinyl polymer (I) and the crosslinkable silyl group of the vinyl polymer (II) may be the same or different and each are preferably a group represented by general formula (1):

-(Si(R¹)_{2-b}(Y)_{b}O]ₘ-Si(R²)₃₋ₐ(Y)ₐ (1)

{wherein R¹ and R² each represent an alkyl group having 1 to 20 carbon atoms, an aryl group having 6 to 20 carbon atoms, an aralkyl group having 7 to 20 carbon atoms, or a triorganosiloxy group represented by (R')₃SiO- (wherein R' represents a monovalent hydrocarbon group having 1 to 20 carbon atoms, and three R's may be the same or different); when two or more R¹s or R²s are present, they may be the same or different; Y represents a hydroxyl group or a hydrolyzable group; when two or more Ys are present, they may be the same or different; a is 0, 1, 2, or 3; b is 0, 1, or 2; m is an integer of 0 to 19; and the relationship
a + mb ≥ 1 is satisfied}.

The crosslinkable silyl group of the vinyl polymer (I) of the present invention is preferably located at an end of the main chain.

Furthermore, the present invention relates to a curable composition containing the following two components: a vinyl polymer (III) which has a crosslinkable silyl group and exhibits a glass transition temperature of less than 23°C as determined with a differential scanning calorimeter and a vinyl polymer (IV) which has a crosslinkable silyl group and exhibits a glass transition temperature of 23°C or more as determined with a differential scanning calorimeter.

Furthermore, the present invention relates to an adhesive, a reactive hot melt adhesive, a sealant, or a liquid gasket including any one of the curable compositions described above.

### Best Mode for Carrying Out the Invention

The present invention relates to curable compositions. More particularly, the invention relates to a curable composition containing the following two components: a vinyl polymer (I) which has at least one crosslinkable silyl group and whose main chain is produced by living radical polymerization and a vinyl polymer (II) which has a crosslinkable silyl group and whose main chain is produced by free radical polymerization and wherein the weight ratio between the vinyl polymer (I) and the vinyl polymer (II) is 1:99 to 99:1; and relates to a curable composition containing the following two components: a vinyl polymer (III) which has a crosslinkable silyl group and exhibits a glass transition temperature of less than 23°C as determined with a differential scanning calorimeter (DSC) and a vinyl polymer (IV) which has a crosslinkable silyl group and exhibits a glass transition temperature of 23°C or more as determined with a differential scanning calorimeter.

In the present invention, the crosslinkable silyl group is defined as a silicon-containing group which includes a hydroxyl group or a hydrolyzable group bonded to a silicon atom and which is crosslinkable by formation of a siloxane bond.

Curable compositions of the present invention will be described in detail below.

### «Vinyl polymer (I) whose main chain is produced by living radical polymerization»

### <Main chain>

The present inventors have made many inventions regarding various vinyl polymers terminated with crosslinkable functional groups, production processes therefor, curable compositions, and applications thereof (refer to Japanese Unexamined Patent Application Publication Nos. 11-080249, 11-080250, 11-005815, 11-116617, 11-116606, 11-080571, 11-080570, 11-130931, 11-100433, 11-116763, 9-272714, 9-272715, etc.). The vinyl polymer (I) of the present invention is not particularly limited. All of the polymers disclosed in the inventions described above can be suitably used as the vinyl polymer (I).

The vinyl monomer constituting the main chain of the vinyl polymer (I) of the present invention is not particularly limited, and various types of vinyl monomer can be used. Examples of the vinyl monomer include (meth)acrylic monomers, such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, isononyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adducts of (meth)acrylic acid, trifluoromethylmethyl (meth)acrylate, 2-trifluoromethylethyl (meth)acrylate, perfluoroethylmethyl (meth)acrylate, 2-perfluoroethylethyl (meth)acrylate, perfluoroethylperfluorobutylmethyl (meth)acrylate, 2-perfluoroethyl-2-perfluorobutylethyl (meth)acrylate, perfluoroethyl (meth)acrylate, perfluoromethyl (meth)acrylate, diperfluoromethylmethyl (meth)acrylate, 2,2-diperfluoromethylethyl (meth)acrylate, perfluoromethylperfluoroethylmethyl (meth)acrylate, 2-perfluoromethyl-2-perfluoroethylethyl (meth)acrylate, 2-perfluorohexylmethyl (meth)acrylate, 2-perfluorohexylethyl (meth)acrylate, 2-perfluorodecylmethyl (meth)acrylate, 2-perfluorodecylethyl (meth)acrylate, 2-perfluorohexadecylmethyl (meth)acrylate, and 2-perfluorohexadecylethyl (meth)acrylate; aromatic vinyl monomers, such as styrene, vinyltoluene, α-methylstyrene, chlorostyrene, styrenesulfonic acid, and salts thereof; fluorine-containing vinyl monomers, such as perfluoroethylene, perfluoropropylene, and vinylidene fluoride; silicon-containing vinyl monomers, such as vinyltrimethoxysilane and vinyltriethoxysilane; maleic anhydride, maleic acid, and monoalkyl esters and dialkyl esters of maleic acid; fumaric acid, and monoalkyl esters and dialkyl esters of fumaric acid; maleimide monomers, such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; acrylonitrile monomers, such as acrylonitrile and methacrylonitrile; amido group-containing vinyl monomers, such as acrylamide and methacrylamide; vinyl esters, such as vinyl acetate, vinyl propionate, vinyl pivalate, vinyl benzoate, and vinyl cinnamate; alkenes, such as ethylene and propylene; conjugated dienes, such as butadiene and isoprene; and vinyl chloride, vinylidene chloride, allyl chloride, and allyl alcohol. These monomers may be used alone or two or more of these monomers may be copolymerized.

The main chain of the vinyl polymer (I) is preferably produced by polymerizing mainly at least one monomer selected from the group consisting of (meth)acrylic monomers, acrylonitrile monomers, aromatic vinyl monomers, fluorine-containing vinyl monomers, and silicon-containing vinyl monomers. Here, "mainly" means that among the monomer units constituting the vinyl polymer, the amount of the at least one monomer described above is 50 mole percent or more, and preferably 70 mole percent or more.

Among these monomers, in view of physical properties of the resulting product, etc., preferred are styrene monomers and (meth)acrylic monomers. More preferred are acrylate monomers and methacrylate monomers, and particularly preferred are acrylate monomers. For general construction use, butyl acrylate monomers are still more preferable in view of the requirements of physical properties, such as the low viscosity of the resulting blend and the low modulus, high elongation, weatherability, and heat resistance of the resulting cured object. On the other hand, in the application in which oil resistance and the like are required, such as in the automobile application, copolymers mainly composed of ethyl acrylate are still more preferable. With respect to the polymers mainly composed of ethyl acrylate, although oil resistance is excellent, low-temperature characteristics (low-temperature resistance) tend to be slightly poor. In order to improve the low-temperature characteristics, ethyl acrylate may be partially replaced by butyl acrylate. However, as the percentage of butyl acrylate is increased, the excellent oil resistance becomes impaired. Therefore, depending on the application requiring oil resistance, the percentage is set preferably at 80% or less, more preferably at 60% or less, still more preferably at 40% or less, and most preferably at 30% or less. Furthermore, in order to improve low-temperature characteristics, etc., without impairing oil resistance, use of 2-methoxyethyl acrylate, 2-ethoxyethyl acrylate, or the like in which oxygen is introduced to the alkyl group at the side chain is also preferable. However, heat resistance tends to be poor due to the introduction of the alkoxy group with the ether bond at the side chain. Therefore, when heat resistance is required, the percentage thereof is set preferably at 60% or less, and more preferably at 40% or less. Depending on the various applications and desired purposes, in consideration of required physical properties, such as oil resistance, heat resistance, and low-temperature characteristics, the percentage is changed, and thus suitable polymers can be obtained.

Examples of polymers having well-balanced physical properties, such as oil resistance, heat resistance, low-temperature characteristics, include, but are not limited to, a copolymer of ethyl acrylate/butyl acrylate/2-methoxyethyl acrylate (40 to 50/20 to 30/30 to 20, in terms of weight ratio).

In order to improve compatibility with other polymers, for example, a modified silicone resin (crosslinkable silyl group-containing oxyalkylene polymer), a monomer having a long-chain alkyl group, such as a stearyl group or lauryl group, or the like may be copolymerized. Although not particularly limited, for example, by copolymerizing 10% to 20% of stearyl acrylate or lauryl acrylate, compatibility with a modified silicone resin is significantly improved. Since compatibility varies depending on the molecular weight of the individual polymers, the percentage of the monomer to be copolymerized is preferably selected accordingly. On this occasion, block copolymerization may be carried out. In some cases, a small amount may show an effect.

With respect to a curable composition which contains a vinyl polymer having a functional silyl group, its curability may become slow due to storage, i.e., storage stability may be decreased. For example, by copolymerizing methyl acrylate, such a decrease may be inhibited. This may also be used when improvement in the strength of the resulting cured object is desired. In such a case, the percentage of the monomer to be copolymerized may be selected depending on the molecular weight, and/or the monomer may be block-copolymerized.

In the present invention, these preferred monomers may be copolymerized or block-copolymerized with other monomers. In such a case, preferably, the content of these preferred monomers is 40% by weight or more. Additionally, in the expression described above, for example, (meth)acrylic acid represents acrylic acid and/or methacrylic acid.

In the application in which rubber elasticity is required, the glass transition temperature of the vinyl polymer (I) is preferably lower than room temperature or working temperature, although not limited thereto.

The molecular-weight distribution, i.e., the ratio (Mw/Mn) of the weight-average molecular weight (Mw) to the number-average molecular weight (Mn) determined by gel permeation chromatography, of the vinyl polymer (I) of the present invention is not particularly limited. In view of workability, the molecular weight distribution is desirably less than 1.8, preferably 1.7 or less, more preferably 1.6 or less, still more preferably 1.5 or less, even more preferably 1.4 or less, and particularly preferably 1.3 or less.

In the present invention, GPC is usually performed using chloroform as the mobile phase and a polystyrene gel column. The number-average molecular weight, etc., are calculated on the basis of a polystyrene standard sample.

The number-average molecular weight of the vinyl polymer (I) of the present invention is not particularly limited. In view of workability and physical properties, the number-average molecular weight is preferably 500 to 1,000,000, more preferably 1,000 to 100,000, and still more preferably 5,000 to 50,000, when determined by gel permeation chromatography.

### <Synthesis method of main chain>

In the present invention, the synthesis method of the vinyl polymer (I) is limited to living radical polymerization among controlled radical polymerization, and atom transfer radical polymerization is preferable, although not limited thereto. These polymerization methods will be described below.

### Controlled radical polymerization

Radical polymerization can be classified into two categories, namely, "ordinary radical polymerization (free radical polymerization)" in which a monomer having a specific functional group and a vinyl monomer are simply copolymerized using an azo compound, a peroxide, or the like as a polymerization initiator, and "controlled radical polymerization" in which a specific functional group can be introduced at a controlled position, for example, a terminus.

The "ordinary radical polymerization" is a simple method. However, in this method, the monomer having the specific functional group is introduced into the polymer only at random. Consequently, in order to produce a polymer having a high functionality factor, a considerable amount of the monomer must be used. If the amount of the monomer used is small, the percentage of the polymer into which the specific functional group is not introduced increases, which is disadvantageous. Furthermore, since free radical polymerization is performed, only a polymer having a broad molecular-weight distribution and a high viscosity is produced, which is also disadvantageous.

The "controlled radical polymerization" can be further classified into two categories, namely, "chain transfer polymerization" in which polymerization is performed using a chain transfer agent having a specific functional group, and consequently, a functional group-terminated vinyl polymer is produced; and "living radical polymerization" in which the propagation end of the polymer propagates without causing termination reaction or the like, and consequently, a polymer having a molecular weight substantially as designed can be produced.

In the "chain transfer polymerization", a polymer having a high functionality factor can be produced. However, a considerable amount of chain transfer agent having a specific functional group is required relative to the initiator, giving rise to economic problems including treatment. Furthermore, as in the "ordinary radical polymerization" described above, since free radical polymerization is performed, only a polymer having a broad molecular-weight distribution and a high viscosity is produced, which is disadvantageous.

Unlike the polymerization methods described above, in the "living radical polymerization", termination reaction does not easily occur, a polymer having a narrow molecular-weight distribution (Mw/Mn of about 1.1 to 1.5) can be produced, and the molecular weight can be freely controlled by the monomer-initiator charge ratio, although the "living radical polymerization" is radical polymerization which is considered to be difficult to control because the polymerization rate is high and the termination reaction due to coupling between radicals and the like easily occurs.

Consequently, in the "living radical polymerization", a polymer having a narrow molecular-weight distribution and a low viscosity can be produced, and furthermore, a monomer having a specific functional group can be introduced into substantially any position of the polymer. Thus, the "living radical polymerization" is more preferable as the method for producing the vinyl polymer having a specific functional group.

In the narrow sense, the term "living polymerization" refers to polymerization in which molecular chains grow with the termini always being active. In the ordinary sense, the living polymerization also includes pseudo-living polymerization in which molecular chains grow with deactivated termini and activated termini being in equilibrium. The latter definition applies to the present invention.

Recently, the "living radical polymerization" has been actively studied by various groups. Examples thereof include polymerization using a cobalt porphyrin complex as shown in Journal of American Chemical Society (J. Am. Chem. Soc.), 1994, 116, 7943; polymerization using a radical capping agent, such as a nitroxide compound, as shown in Macromolecules 1994, 27, 7228; and "atom transfer radical polymerization" (ATRP) using an organic halide or the like as an initiator and a transition metal complex as a catalyst.

Among the "living radical polymerization methods", the "atom transfer radical polymerization" in which a vinyl monomer is polymerized using an organic halide or a halogenated sulfonyl compound as an initiator and a transition metal complex as a catalyst has the characteristics of the "living radical polymerization" described above and is also characterized in that the chain is terminated with a halogen or the like that is relatively advantageous to functional group conversion reaction, and great freedom on the design of the initiator and the catalyst is provided. Thus, the "atom transfer radical polymerization" is further more preferable as the method for producing the vinyl polymer having a specific functional group. Examples of the atom transfer radical polymerization method include methods by Matyjaszewski et al., disclosed in Journal of American Chemical Society (J. Am. Chem. Soc.) 1995, 117, 5614, Macromolecules 1995, 28, 7901, Science 1996, 272, 866, and PCT Publication Nos. W096/30421, WO97/18247, WO98/01480, and WO98/40415; and methods by Sawamoto et al., disclosed in Macromolecules 1995, 28, 1721 and Japanese Unexamined Patent Application Publication Nos. 9-208616 and 8-41117.

In the present invention, among these living radical polymerization methods, any method may be used without limitation. Preferably, atom transfer radical polymerization is used.

Prior to a detailed description of living radical polymerization, polymerization using a chain transfer agent will be described, which is one of controlled radical polymerization methods and can be used for the production of vinyl polymers that will be described below. The radical polymerization using a chain transfer agent (telomer) is not particularly limited. As the method for producing a vinyl polymer having the terminal structure suitable in the present invention, the following two methods are exemplified.

Namely, in a first method, a halogen-terminated polymer is produced using a halogenated hydrocarbon as a chain transfer agent as disclosed in Japanese Unexamined Patent Application Publication No. 4-132706. In a second method, a hydroxyl group-terminated polymer is produced using a hydroxyl group-containing mercaptan, a hydroxyl group-containing polysulfide, or the like as a chain transfer agent as disclosed in Japanese Unexamined Patent Application Publication No. 61-271306, Japanese Patent No. 2594402, or Japanese Unexamined Patent Application Publication No. 54-47782.

Living radical polymerization methods will be described below.

First, a method in which a radical capping agent, such as a nitroxide compound, is used will be described. In this polymerization method, a nitroxy free radical (=N-O.), which is generally stable, is used as the radical capping agent. Preferred examples of such a compound include, but are not limited to, nitroxy free radicals derived from cyclic hydroxyamines, such as 2,2,6,6-substituted-1-piperidinyloxy radicals and 2,2,5,5-substituted-1-pyrrolidinyloxy radicals. As the substituent, an alkyl group having not more than 4 carbon atoms, such as a methyl group or ethyl group is suitable. Specific examples of the nitroxy free radical compounds include, but are not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N,N-di-tert-butylaminoxy radical. Instead of nitroxy free radicals, other stable free radicals, such as galvinoxyl free radical, may be used.

The radical capping agent is used in combination with a radical generator. It is considered that a reaction product from the radical capping agent and the radical generator serves as a polymerization initiator to allow the polymerization of addition-polymerizable monomers to proceed. Although the ratio between both is not particularly limited, the radical generator is suitably used in an amount of 0.1 to 10 moles per mole of the radical capping agent.

Various compounds can be used as the radical generator. A peroxide capable of generating a radical under polymerization temperature conditions is preferably used. Examples of the peroxide include, but are not limited to, diacyl peroxides, such as benzoyl peroxide and lauroyl peroxide; dialkyl peroxides, such as dicumyl peroxide and di-tert-butyl peroxide; peroxycarbonates, such as diisopropyl peroxydicarbonate and bis(4-tert-butylcyclohexyl) peroxydicarbonate; and alkyl peresters, such as tert-butyl peroxyoctoate and tert-butyl peroxybenzoate. In particular, benzoyl peroxide is preferred. Furthermore, instead of peroxides, other radical generators, such as radical-generating azo compounds, e.g., azobisisobutyronitrile, may be used.

As reported in Macromolecules 1995, 28, 2993, instead of combined use of a radical capping agent and a radical generator, alkoxyamine compounds such as those illustrated below may be used as initiators.

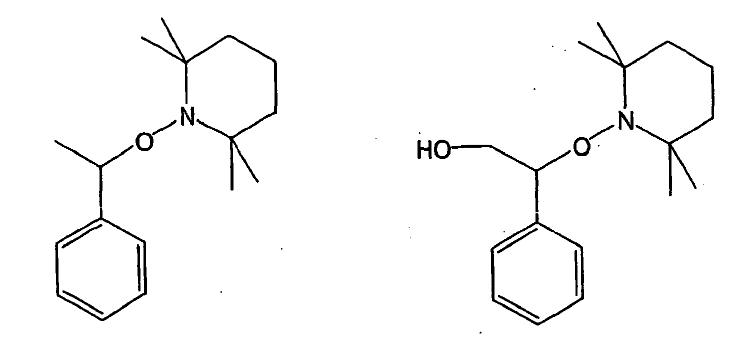

When an alkoxyamine compound is used as the initiator and the compound has a functional group, for example, a hydroxyl group or the like, such as the one illustrated above, a functional group-terminated polymer is obtained. If this is used in the method of the present invention, a functional group-terminated polymer is obtained.

The polymerization conditions, such as the monomer, solvent, and polymerization temperature, used in the polymerization method using a radical scavenger, such as the nitroxide compound, are not particularly limited, but may be the same as those used in the atom transfer radical polymerization which will be described below.

### Atom transfer radical polymerization

The atom transfer radical polymerization method, which is more preferable as the living radical polymerization of the present invention, will now be described.

In the atom transfer radical polymerization, an organic halide, in particular, an organic halide having a highly reactive carbon-halogen bond (e.g., a carbonyl compound having a halogen at the α-position or a compound having a halogen at the benzyl position), a halogenated sulfonyl compound, or the like is used as an initiator.

Specific examples are as follows:
C₆H₅-CH₂X, C₆H₅-C(H) (X)CH₃, and C₆H₅-C(X) (CH₃)₂
   (wherein C₆H₅ represents a phenyl group, and X represents chlorine, bromine, or iodine);
R¹-C(H) (X) -CO₂R², R¹-C(CH₃) (X) -CO₂R², R¹-C(H)(X)-C(O)R², and R¹-C(CH₃) (X)-C(O)R²
   (wherein R¹ and R² each represent a hydrogen atom or an alkyl, aryl, or aralkyl group having 1 to 20 carbon atoms, and X represents chlorine, bromine, or iodine); and
R¹-C₆H₄-SO₂X

   (wherein R¹ represents a hydrogen atom or an alkyl, aryl, or aralkyl group having 1 to 20 carbon atoms, and X represents chlorine, bromine, or iodine).

An organic halide or halogenated sulfonyl compound having a functional group other than the functional group which initiates polymerization may be used as an initiator in the atom transfer radical polymerization. In such a case, a vinyl polymer having the functional group at one end of the main chain and the propagating terminal structure of atom transfer radical polymerization at the other end of the main chain is produced. Examples of such a functional group include an alkenyl group, a crosslinkable silyl group, a hydroxyl group, an epoxy group, an amino group, and an amido group.

The alkenyl group-containing organic halide is not particularly limited, and examples thereof include those having a structure represented by general formula (2):

R⁴R⁵C(X)-R⁶-R⁷-C(R³)=CH₂ (2)

(wherein R³ represents hydrogen or a methyl group; R⁴ and R⁵ each represent hydrogen or a monovalent alkyl, aryl, or aralkyl group having 1 to 20 carbon atoms, and R⁴ and R⁵ may be bonded together at their respective free ends; R⁶ represents -C(O)-O- (ester group), -C(O)- (keto group), or an O*-,* m-, or p-phenylene group; R⁷ represents a direct bond or a divalent organic group having 1 to 20 carbon atoms, which may contain one or more ether bonds; and X represents chlorine, bromine, or iodine).

Specific examples of each of the substituents R⁴ and R⁵ include hydrogen, a methyl group, an ethyl group, an n-propyl group, an isopropyl group, a butyl group, a pentyl group, and a hexyl group. R⁴ and R⁵ may be bonded together at their respective free ends to form a cyclic skeleton.

Specific examples of the alkenyl group-containing organic halide represented by general formula (2) are as follows:
XCH₂C(O)O(CH₂)ₙCH=CH₂, H₃CC(H)(X)C(O)O(CH₂)ₙCH=CH₂, (H₃C)₂C(X) C (O)O(CH₂)ₙCH=CH₂, CH₃CH₂C(H)(X)C(O)O(CH₂)nCH=CH₂, and 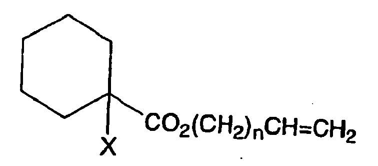 (wherein X represents chlorine, bromine, or iodine, and n is an integer of 0 to 20);
XCH₂C(O)O(CH₂)ₙO(CH₂)ₘCH=CH₂,
H₃CC(H)(X)C(O)O(CH₂)ₙO(CH₂)ₘCH=CH₂,
(H₃C)₂C(X)C(O)O(CH₂)ₙO(CH₂)ₘCH=CH₂,
CH₃CH₂C(H)(X)C(O)O(CH₂)ₙO(CH₂)ₘCH=CH₂, and 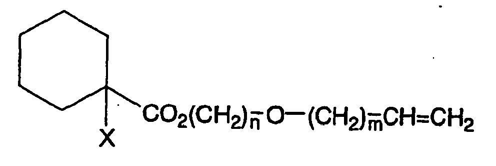 (wherein X represents chlorine, bromine, or iodine, n is an integer of 1 to 20, and m is an integer of 0 to 20) ;
o, m, p-XCH₂-C₆H₄-(CH₂)ₙ-CH=CH₂,
o, m, p-CH₃C(H)(X)-C₆H₄-(CH₂)ₙ-CH=CH₂, and
o, m, p-CH₃CH₂C(H)(X)-C₆H₄-(CH₂)ₙ-C_{H}=CH₂
   (wherein X represents chlorine, bromine, or iodine, and n is an integer of 0 to 20);
o, m, p-XCH₂-C₆H₄-(CH₂)ₙ-O-(CH₂)ₘ-CH=CH₂,
o, m, p-CH₃C(H)(X)-C₆H₄-(CH₂)ₙ-O-(CH₂)ₘ-CH=CH₂, and
o, m, p-CH₃CH₂C(H)(X)-C₆H₄-(CH₂)ₙ-O-(CH₂)ₘCH=CH₂
   (wherein X represents chlorine, bromine, or iodine, n is an integer of 1 to 20, and m is an integer of 0 to 20) ;
o, m, p-XCH₂-C₆H₄-O-(CH₂)ₙ-CH=CH₂,
o, m, p-CH₃C(H)(X)-C₆H₄-O-(CH₂)ₙ-CH=CH₂, and
o, m, p-CH₃CH₂C(H)(X)-C₆H₄-O-(CH₂)ₙ-CH=CH₂
   (wherein X represents chlorine, bromine, or iodine, and n is an integer of 1 to 20); and
o, m, p-XCH₂-C₆H₄-O-(CH₂)ₙ-O-(CH₂)ₘ-CH=CH₂,
o, m, p-CH₃C(H)(X)-C₆H₄-O-(CH₂)ₙ-O-(CH₂)ₘ-CH=CH₂, and
o, m, p-CH₃CH₂C(H)(X)-C₆H₄-O-(CH₂)ₙ-O-(CH₂)ₘ-CH=CH₂
   (wherein X represents chlorine, bromine, or iodine, n is an integer of 1 to 20, and m is an integer of 0 to 20).

Other examples of the alkenyl group-containing organic halide include compounds represented by general formula (3):

H₂C=C(R³)-R⁷-C(R⁴)(X)-R⁸-R⁵ (3)

(wherein R³, R⁴, R5, R⁷, and X are the same as those described above, and R⁸ represents a direct bond, - C(O)O- (ester group), -C(O)- (keto group), or an o-, m-, or p-phenylene group).

R⁶ represents a direct bond or a divalent organic group having 1 to 20 carbon atoms (which may contain one or more ether bonds). When R⁶ is a direct bond, the halide is an allyl halide in which a vinyl group is bonded to the carbon atom to which a halogen is bonded. In such a case, since the carbon-halogen bond is activated by the neighboring vinyl group, R⁸ is not necessarily a C(O)O group, a phenylene group, or the like, and may be a direct bond. When R⁷ is not a direct bond, R⁸ is preferably a C(O)O group, a C(O) group, or a phenylene group so that the carbon-halogen bond is activated.

Specific examples of the compound represented by general formula (3) are as follows:
CH₂=CHCH₂X, CH₂=C(CH₃)CH₂X, CH₂=CHC(H)(X)CH₃,
CH₂=C(CH₃)C(H)(X)CH₃, CH₂=CHC(X) (CH₃)₂,
CH₂=CHC(H)(X)C₂H₅, CH₂=CHC(H)(X)CH(CH₃)₂,
CH₂=CHC(H)(X)C₆H₅, CH₂=CHC(H)(X)CH₂C₆H₅,
CH₂=CHCH₂C(H) (X)-CO₂R, CH₂=CH(CH₂)₂C(H)(X)-CO₂R,
CH₂=CH(CH₂)₃C(H)(X)-CO₂R, CH₂=CH(CH₂)₈C(H)(X)-CO₂R,
CH₂=CHCH₂C(H)(X)-C₆H₅, CH₂=CH(CH₂)₂C(H)(X)-C₆H₅, and
CH₂=CH(CH₂)₃C(H) (X) -C₆H₅
   (wherein X represents chlorine, bromine, or iodine, and R represents an alkyl, aryl, or aralkyl group having 1 to 20 carbon atoms).

Specific examples of the alkenyl group-containing halogenated sulfonyl compound are as follows:
o-, m-, p-CH₂=CH-(CH₂)ₙ-C₆H₄-SO₂X, and
o-, m-, p-CH₂=CH-(CH₂)ₙ-O-C₆H₄-SO₂X,
   (wherein X represents chlorine, bromine, or iodine, and n is an integer of 0 to 20).

The crosslinkable silyl group-containing organic halide is not particularly limited, and examples thereof include a compound having a structure represented by general formula (4):

R⁴R⁵C(X)-R⁶-R⁷-C(H)(R³)CH₂-[Si(R⁹)_{2-b}(Y)_{b}O]ₘ-Si(R¹⁰)₃₋ₐ(Y)ₐ (4)

(wherein R³, R⁴, R⁵, R⁶, R⁷, and X are the same as those described above; R⁹ and R¹⁰ each represent an alkyl, aryl, or aralkyl group having 1 to 20 carbon atoms, or a triorganosiloxy group represented by (R')₃SiO- (wherein R' represents a monovalent hydrocarbon group having 1 to 20 carbon atoms, and three R's may be the same or different); when two or more R⁹s or R¹⁰s are present, they may be the same or different; Y represents a hydroxyl group or a hydrolyzable group; when two or more Ys are present, they may be the same or different; a is 0, 1, 2, or 3; b is 0, 1, or 2; m is an integer of 0 to 19; and the relationship
a + mb ≥ 1 is satisfied).

Specific examples of the compound represented by general formula (4) are as follows:
XCH₂C(O)O(CH₂)ₙSi(OCH₃)₃, CH₃C(H)(X)C(O)O(CH₂)ₙSi(OCH₃)₃, (CH₃)₂C(X)C(O)O(CH₂)ₙSi(OCH₃)₃,
XCH₂C(O)O(CH₂)ₙSi(CH₃)(OCH₃)₂,
CH₃C(H)(X)C(O)O(CH₂)ₙSi(CH₃)(OCH₃)₂, and
(CH₃)₂C(X)C(O)O(CH₂)ₙSi(CH₃)(OCH₃)₂
   (wherein X represents chlorine, bromine, or iodine, and n is an integer of 0 to 20);
XCH₂C(O)O(CH₂)ₙO(CH₂)ₘSi(OCH₃)₃,
H₃CC(H)(X)C(O)O(CH₂)ₙO(CH₂)Si(OCH₃)₃,
(H₃C)₂C(X)C(O)O(CH₂)ₙO(CH₂)ₘSi(OCH₃)₃,
CH₃CH₂C(H)(X)C(O)O(CH₂)ₙO(CH₂)ₘSi(OCH₃)₃,
XCH₂C(O)O(CH₂)ₙO(CH₂)ₘSi(CH₃)(OCH₃)_{2,}
H₃CC(H) (X)C(O)O(CH₂)nO(CH₂)ₘ-Si(CH₃)(OCH₃)₂,
(H₃C)₂C(X)C(O)O(CH₂)ₙO(CH₂)ₘ-Si(CH₃)(OCH₃)₂, and
CH₃CH₂C(H)(X)C(O)O(CH₂)ₙO(CH₂)ₘ-Si(CH₃)(OCH₃)₂
   (wherein X represents chlorine, bromine, or iodine, n is an integer of 1 to 20, and m is an integer of 0 to 20) ;
o, m, p-XCH₂-C₆H₄-(CH₂)₂Si(OCH₃)₃,
o, m, p-CH₃C(H) (X)-C₆H₄-(CH₂)₂Si(OCH₃)₃,
o, m, p-CH₃CH₂C(H)(X)-C₆H₄-(CH₂)₂Si(OCH₃)₃,
o, m, p-XCH₂-C₆H₄-(CH₂)₃Si(OCH₃)₃,
o, m, p-CH₃C(H)(X)-C₆H₄-(CH₂)₃Si(OCH₃)₃,
o, m, p-CH₃CH₂C(H)(X)-C₆H₄-(CH₂)₃Si(OCH₃)₃,
o, m, p-XCH₂-C₆H₄-(CH₂)₂-O-(CH₂)₃Si(OCH₃)₃,
o, m, p-CH₃C(H)(X)-C₆H₄-(CH₂)₂-O-(CH₂)₃Si(OCH₃)₃,
o, m, p-CH₃CH₂C(H)(X)-C₆H₄-(CH₂)₂-O-(CH₂)₃Si (OCH₃) ₃,
o, m, p-XCH₂-C₆H₄-O-(CH₂)₃Si(OCH₃)₃,
o, m, p-CH₃C(H)(X)-C₆H₄-O-(CH₂)₃Si(OCH₃)₃,
o, m, p-CH₃CH₂C(H)(X)-C₆H₄-O-(CH₂)₃-Si(OCH₃)₃,
0, m, p-XCH₂-C₆H₄-O-(CH₁)2-O-(CH₂)₃-Si(OCH₃)₃,
o, m, p-CH₃C(H)(X)-C₅H₄-O-(CH₂)₂-O-(CH₂)₃Si(OCH₃)₃, and
o, m, p-CH₃CH₂C(H)(X)-C₆H₄-O-(CH₂)₂-O-(CH₂)₃Si(OCH₃)₃
   (wherein X represents chlorine, bromine, or iodine).

Other examples of the crosslinkable silyl group-containing organic halide include compounds having a structure represented by general formula (5):

(R¹⁰)₃₋ₐ(Y)ₐSi-[OSi(R⁹)_{2-b}(Y)_{b}]ₘ-CH₂-C(H)(R³)R⁷-C(R⁴) (X) - R⁸-R⁵ (5)

(wherein R³, R⁴, R⁵, R⁷, R⁸, R⁹, R¹⁰, a, b, m, X, and Y are the same as those described above).

Specific examples of such a compound are as follows:
(CH₃O)₃SiCH₂CH₂C(H) (X)C₆H₅,
(CH₃O)₂(CH₃)SiCH₂CH₂C(H)(X)C₆H₅, (CH₃O)₃Si(CH₂)₂C(H)(X) - CO₂R, (CH₃O)₂(CH₃)Si (CH₂)2C (H) (X) -CO₂R,
(CH_{3O})₃Si(CH₂)₃C(H)(X)-CO₂R, (CH₃O)₂(CH₃)Si (CH₂)₃C(H)(X) - CO₂R, (CH_{3O})₃Si(CH₂)₄C(H)(X) -CO₂R,
(CH_{3O})₂(CH₃) Si (CH₂)₄C (H) (X) -CO₂R, (CH_{3O})₃Si (CH₂)₉C (H) (X) - CO₂R, (CH₃O)₂(CH₃)Si (CH₂)₉C(H) (X) CO₂R,
(CH₃O)₃Si(CH₂)₃C(H)(X) C₆H₅, (CH₃O)₂(CH₃)Si(CH₂)₃C(H)(X) - C₆H₅, (CH₃O)₃Si(CH₂)₄C(H)(X) -C₆H₅, and
(CH₃O)₂(CH₃)Si(CH₂)₄C(H) (X) -C₆H₅
   (wherein X represents chlorine, bromine, or iodine, and R represents an alkyl, aryl, or aralkyl group having 1 to 20 carbon atoms).

The hydroxyl group-containing organic halide or halogenated sulfonyl compound is not particularly limited, and examples thereof include compounds represented by the following formula:

HO- (CH₂)ₙ-OC(O)C(H)(R)(X)

(wherein X represents chlorine, bromine, or iodine, R represents a hydrogen atom or an alkyl, aryl, or aralkyl group having 1 to 20 carbon atoms, and n is an integer of 1 to 20).

The amino group-containing organic halide or halogenated sulfonyl compound is not particularly limited, and examples thereof include compounds represented by the following formula:

H₂N-(CH₂)ₙ-OC(O)C(H) (R) (X)

(wherein X represents chlorine, bromine, or iodine, R represents a hydrogen atom or an alkyl, aryl, or aralkyl group having 1 to 20 carbon atoms, and n is an integer of 1 to 20).

The epoxy group-containing organic halide or halogenated sulfonyl compound is not particularly limited, and examples thereof include compounds represented by the following formula: 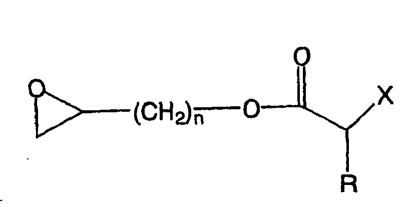 (wherein X represents chlorine, bromine, or iodine, R represents a hydrogen atom or an alkyl, aryl, or aralkyl group having 1 to 20 carbon atoms, and n is an integer of 1 to 20).

In order to produce a polymer having at least two propagating terminal structures per molecule, preferably, an organic halide or halogenated sulfonyl compound having at least two initiation sites is used as an initiator. Specific examples thereof are as follows: 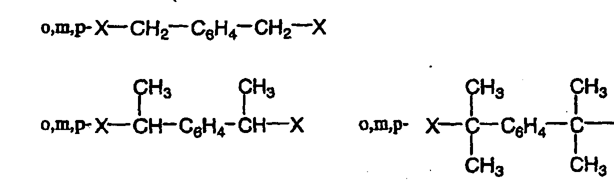 (wherein C₆H₄ is a phenylene group, and X represents chlorine, bromine, or iodine); 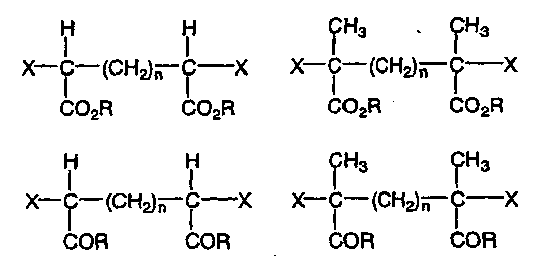 (wherein R represents an alkyl, aryl, or aralkyl group having 1 to 20 carbon atoms, n is an integer of 0 to 20, and X represents chlorine, bromine, or iodine); 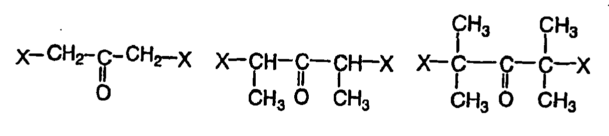 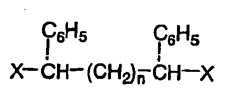 (wherein X represents chlorine, bromine, or iodine, and n is an integer of 0 to 20); 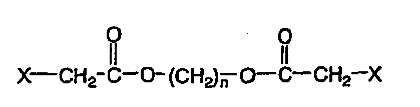 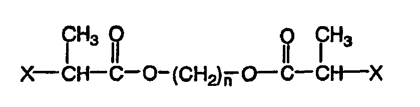 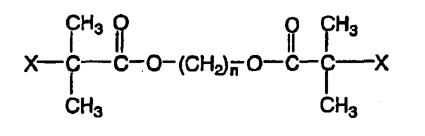 (wherein n is an integer of 1 to 20, and X represents chlorine, bromine, or iodine); and

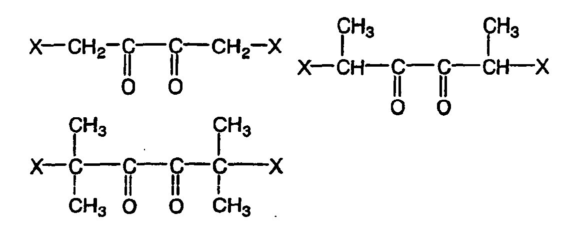

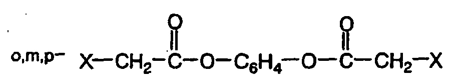

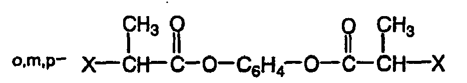

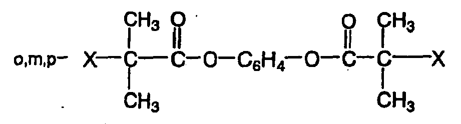

o,m,p- X-SO₂-C₆H₄-SO₂-X

(wherein X represents chlorine, bromine, or iodine).

The vinyl monomer used in this polymerization is not particularly limited, and all of the vinyl monomers exemplified above can be suitably used.

The transition metal complex used as the polymerization catalyst is not particularly limited, but .preferably is a metal complex with an element selected from Groups 7, 8, 9, 10, and 11 of the periodic table as the central metal. More preferred are complexes of zero-valent copper, monovalent copper, divalent ruthenium, divalent iron, and divalent nickel. Among them, copper complexes are still more preferred. Specific examples of the monovalent copper compound include cuprous chloride, cuprous bromide, cuprous iodide, cuprous cyanide, cuprous oxide, and cuprous perchlorate. When a copper compound is used, in order to enhance the catalytic activity, 2,2'-bipyridyl or a derivative thereof, 1,10-phenanthroline or a derivative thereof, or a polyamine, such as tetramethylethylenediamine, pentamethyldiethylenetriamine, or hexamethyltris(2-aminoethyl)amine, is added as a ligand. A preferred ligand is a nitrogen-containing compound, a more preferred ligand is a chelate-type nitrogen-containing compound, and a still more preferred ligand is N,N,N',N",N"-pentamethyldiethylenetriamine. A complex of divalent ruthenium chloride with tristriphenylphosphine (RuCl₂(PPh₃)₃) is also suitable as the catalyst. When a ruthenium compound is used as the catalyst, an aluminum alkoxide is added as an activator. Furthermore, a complex of divalent iron with bistriphenylphosphine (FeCl₂(PPh₃)₂), a complex of divalent nickel with bistriphenylphosphine (NiCl₂(PPh₃)₂), or a complex of divalent nickel with bistributylphosphine (NiBr₂(PBu₃)₂) is also suitable as the catalyst.

The polymerization can be carried out in the absence of a solvent or in the presence of any of various types of solvent. Examples of the solvent which may be used include hydrocarbon solvents, such as benzene and toluene; ether solvents, such as diethyl ether and tetrahydrofuran; halogenated hydrocarbon solvents, such as methylene chloride and chloroform; ketone solvents, such as acetone, methyl ethyl ketone, and methyl isobutyl ketone; alcohol solvents, such as methanol, ethanol, propanol, isopropanol, n-butyl alcohol, and tert-butyl alcohol; nitrile solvents, such as acetonitrile, propionitrile, and benzonitrile; ester solvents, such as ethyl acetate and butyl acetate; and carbonate solvents, such as ethylene carbonate and propylene carbonate. These solvents may be used alone or in combination.

The polymerization can be carried out in a range of 0°C to 200°C, although not limited thereto, and preferably in a range of 50°C to 150°C.

The atom transfer radical polymerization of the present invention also includes reverse atom transfer radical polymerization. In the reverse atom transfer radical polymerization, a common radical initiator, such as a peroxide, is allowed to act on an ordinary atom transfer radical polymerization catalyst in the highly oxidized state caused by generation of radicals, for example, on Cu (II') when Cu (I) is used as a catalyst, thus producing the same equilibrium as that in atom transfer radical polymerization (refer to Macromolecules 1999, 32, 2872).

### <Functional group>

### Number of crosslinkable silyl groups

The number of crosslinkable silyl groups in the vinyl polymer (I) is not particularly limited. From the standpoints of curability of the resulting composition and physical properties of the resulting cured object, the average number of crosslinkable silyl groups per molecule is preferably at least one, more preferably 1.1 to 4.0, and still more preferably 1.2 to 3.5.

### Position of crosslinkable silyl group

When the cured object obtained from the curable composition of the present invention is particularly required to have rubber-like properties, preferably, at least one crosslinkable silyl group is positioned at an end of the molecular chain because the molecular weight between crosslinking points, which greatly affects rubber elasticity, can be increased. More preferably, all crosslinkable functional groups are positioned at the ends of the molecular chain.

Methods for producing the vinyl polymer (I) having at least one crosslinkable silyl group at its molecular end, in particular, a (meth)acrylic polymer, are disclosed in Japanese Examined Patent Application Publication Nos. 3-14068 and 4-55444, Japanese Unexamined Patent Application Publication No. 6-211922, etc. However, since these methods are free radical polymerization methods in which the above-described "chain transfer polymerization" is performed, the resulting polymers generally have a broad molecular-weight distribution (Mw/Mn) of 2 or more and a high viscosity although they have crosslinkable functional groups at the ends of the molecular chains in relatively high proportions. Therefore, in order to obtain a vinyl polymer having a narrow molecular-weight distribution and a low viscosity and having crosslinkable functional groups at the ends of the molecular chain in high proportions, the above-described "living radical polymerization" is preferably used.

The functional groups will be described below.

### Crosslinkable silyl group

In the present invention, the crosslinkable silyl group of the vinyl polymer (I) can be exemplified by a group represented by general formula (6) :

-[Si(R⁹)_{2-b}(Y)_{b}O]ₘ-Si(R¹⁰)₃₋ₐ(Y)_{a a} (6)

{wherein R⁹ and R¹⁰ each represent an alkyl group having 1 to 20 carbon atoms, an aryl group having 6 to 20 carbon atoms, an aralkyl group having 7 to 20 carbon atoms, or a triorganosiloxy group represented by (R')₃SiO- (wherein R' represents a monovalent hydrocarbon group having 1 to 20 carbon atoms, and three R's may be the same or different); when two or more R⁹s or R¹⁰s are present, they may be the same or different; Y represents a hydroxyl group or a hydrolyzable group; when two or more Ys are present, they may be the same or different; a is 0, 1, 2, or 3; b is 0, 1, or 2; m is an integer of 0 to 19; and the relationship
a + mb ≥ 1 is satisfied}.

Examples of the hydrolyzable group include a hydrogen atom, an alkoxy group, an acyloxy group, a ketoximate group, an amino group, an amido group, an aminooxy group, a mercapto group, and an alkenyloxy group, which are commonly used groups. Among these, an alkoxy group, an amido group, and an aminooxy group are preferred, and from the standpoints of mild hydrolyzability and ease of handling, an alkoxy group is particularly preferred.

One to three hydrolyzable groups or hydroxyl groups can be bonded to one silicon atom, and (a + Σb) is preferably in a range of 1 to 5. When two or more hydrolyzable groups or hydroxyl groups are bonded in the crosslinkable silyl group, they may be the same or different. The number of silicon atoms constituting the crosslinkable silyl group is one or more. When silicon atoms are linked by siloxane bonding or the like, the number of silicon atoms is preferably 20 or less. In particular, a crosslinkable silyl group represented by general formula (7):

-Si(R¹⁰)₃₋ₐ(Y)ₐ (7)

(wherein R¹⁰ and Y are the same as those described above, and a is an integer of 1 to 3) is preferable because of ease in availability.

Although not particularly limited, in consideration of curability, a is preferably 2 or more.

As the crosslinkable silyl group-containing vinyl polymer, a polymer having a hydrolyzable silicon group in which two hydrolyzable groups are bonded to one silicon atom is often used. However, when such a polymer is used in the application of adhesives or the like, or used at low temperatures, and in particular, when a very high curing rate is required, the curing rate of the polymer is insufficient. Furthermore, when flexibility is desired after curing, the crosslinking density must be decreased. As a result, because of insufficient crosslinking density, stickiness (surface tackiness) may occur. In such a case, a group in which a is 3 (e.g., trimethoxy functional group) is preferable.

A polymer having a group in which a is 3 (e.g., trimethoxy functional group) has a higher curing rate than a polymer having a group in which a is 2 (e.g., dimethoxy functional group). In some cases, a polymer having a group in which a is 2 exhibits superior storage stability and mechanical properties (elongation, etc.). In order to achieve a balance between curability and physical properties, a group in which a is 2 (e.g., dimethoxy functional group) and a group in which a is 3 (e.g., trimethoxy functional group) may be used together.

For example, when Ys are the same, as a increases, the reactivity of Y increases. By selecting Y and a variously, it is possible to control curability and mechanical properties and the like of the resulting cured object. Selection can be performed depending on the various applications and desired purposes. Furthermore, a polymer having a group in which a is 1 can be used by mixing with a crosslinkable silyl group-containing polymer as a chain extender,in particular, at least one polymer selected from the group consisting of polysiloxane-based, polyoxypropylene-based, and polyisobutylene-based polymers. Thereby, it is possible to produce a composition which has low viscosity before curing and high elongation at break, low bleeding properties, low surface staining properties, and excellent paint adhesion after curing.

### <Crosslinkable silyl group introduction method>

Methods for introducing the crosslinkable silyl group into the vinyl polymer (I) of the present invention will be described below. However, it is to be understood that the present invention is not limited thereto.

Examples of synthesis methods of the vinyl polymer (I) having at least one crosslinkable silyl group include the followings:
(A) Method in which a crosslinkable silyl group-containing hydrosilane compound is added to a vinyl polymer having at least one alkenyl group in the presence of a hydrosilylation catalyst;
(B) Method in which a vinyl polymer having at least one hydroxyl group is allowed to react with a compound having groups reactable with the hydroxyl group per molecule, such as a compound having a crosslinkable silyl group or an isocyanato group;
(C) Method in which a compound having both a polymerizable alkenyl group and a crosslinkable silyl group per molecule is subjected to reaction in the synthesis of a vinyl polymer by radical polymerization;
(D) Method in which a crosslinkable silyl group-containing chain transfer agent is used in the synthesis of a vinyl polymer by radical polymerization; and
(E) Method in which a vinyl polymer having at least one highly reactive carbon-halogen bond is allowed to react with a compound having a crosslinkable silyl group and a stable carbanion per molecule.

The vinyl polymer having at least one alkenyl group used in method (A) can be produced by various methods. Examples of synthesis method will be described below, although not limited thereto.
(A-a) Method in which a compound having both a polymerizable alkenyl group and an alkenyl group with low polymerizability per molecule, such as the one represented by general formula (9) below, is used as a second monomer in the synthesis of a vinyl polymer by radical polymerization.

   H₂C=C(R¹⁴)-R¹⁵-R¹⁶-C(R¹⁷)=CH₂ (9)

   (wherein R¹⁴ represents hydrogen or a methyl group; R¹⁵ represents -C(O)O- or an o-, m-, or p-phenylene group; R¹⁶ represents a direct bond or a divalent organic group having 1 to 20 carbon atoms, which may contain one or more ether bonds; and R¹⁷ represents hydrogen, an alkyl group having 1 to 20 carbon atoms, an aryl group having 6 to 20 carbon atoms, or an aralkyl group having 7 to carbon atoms.)
   The timing of subjecting the compound having both a polymerizable alkenyl group and an alkenyl group with low polymerizability per molecule to reaction is not particularly limited. However, when rubber-like properties are expected in living radical polymerization in particular, such a compound is preferably subjected to reaction as the second monomer at the final stage of the polymerization reaction or after the completion of reaction of a predetermined monomer.
(A-b) Method in which a compound having at least two alkenyl groups with low polymerizability, e.g., 1,5-hexadiene, 1,7-octadiene, or 1,9-decadiene, is subjected to reaction at the final stage of the polymerization reaction or after the completion of reaction of a predetermined monomer in the synthesis of a vinyl polymer by living radical polymerization.
(A-c) Method in which a vinyl polymer having at least one highly reactive carbon-halogen bond is allowed to react with an alkenyl group-containing organometallic compound, e.g., an organotin compound such as allyltributyltin or allyltrioctyltin, for substitution of the halogen.
(A-d) Method in which a vinyl polymer having at least one highly reactive carbon-halogen bond is allowed to react with a stabilized, alkenyl group-containing carbanion, such as the one represented by general formula (10), for substitution of the halogen.

   M⁺C⁻ (R¹⁹) (R¹⁹)-R²⁰-C(R¹⁷)-CH₂ (10)

   (wherein R¹⁷ is the same as that described above; R¹⁸ and R¹⁹ each represent an electron-attracting group for stabilizing the carbanion C⁻, or one of R¹⁸ and R¹⁹ represents the electron-attracting group and the other represents hydrogen, an alkyl group having 1 to 10 carbon atoms, or a phenyl group; R²⁰ represents a direct bond or a divalent organic group having 1 to 10 carbon atoms, which may contain one or more ether bonds; and M⁺ represents an alkali metal ion or a quaternary ammonium ion.)
   As the electron-attracting groups represented by R¹⁸ and R¹⁹, -CO₂R, -C(O)R, and -CN are particularly preferable.
(A-e) Method in which a vinyl polymer having at least one highly reactive carbon-halogen bond is treated with an elemental metal, such as zinc, or an organometallic compound to prepare an enolate anion, and then the enolate anion is allowed to react with an alkenyl group-containing electrophilic compound, e.g., an alkenyl group-containing compound having a leaving group, such as a halogen or an acetyl group, an alkenyl group-containing carbonyl compound, an alkenyl group-containing isocyanate compound, or an alkenyl group-containing acid halide.
(A-f) Method in which a vinyl polymer having at least one highly reactive carbon-halogen bond is allowed to react with an alkenyl group-containing oxy-anion or carboxylate anion, such as the one represented by general formula (11) or (12), for substitution of the halogen.

   H₂C=C(R¹⁷)-R²¹-O-M⁺ (11)

   (wherein R¹⁷ and M⁺ are the same as those described above, and R²¹ represents a divalent organic group having 1 to 20 carbon atoms, which may contain one or more ether bonds.)

   H₂C=C(R¹⁷)-R²²-C(O)O⁻M⁺ (12)

   (wherein R¹⁷ and M⁺ are the same as those described above, and R²² represents a direct bond or a divalent organic group having 1 to 20 carbon atoms, which may contain one or more ether bonds.)
   Examples of the method for synthesizing the vinyl polymer having at least one highly reactive carbon-halogen bond include, but are not limited to, the atom transfer radical polymerization method using an organic halide or the like as an initiator and a transition metal complex as a catalyst as described above.
   The vinyl polymer having at least one alkenyl group can also be obtained from a vinyl polymer having at least one hydroxyl group. Examples of synthesis method will be described below, although not limited thereto.
(A-g) Method in which the hydroxyl group of a vinyl polymer having at least one hydroxyl group is treated with a base, such as sodium methoxide, and then allowed to react with an alkenyl group-containing halide, such as allyl chloride.
(A-h) Method in which the hydroxyl group of a vinyl polymer having at least one hydroxyl group is allowed to react with an alkenyl group-containing isocyanate compound, such as allyl isocyanate.
(A-i) Method in which the hydroxyl group of a vinyl polymer having at least one hydroxyl group is allowed to react with an alkenyl group-containing acid halide, such as (meth)acrylic acid chloride in the presence of a base, such as pyridine.
(A-j) Method in which the hydroxyl group of a vinyl polymer having at least one hydroxyl group is allowed to react with an alkenyl-group containing carboxylic acid, such as acrylic acid, in the presence of an acid catalyst.

In the present invention, when a halogen does not directly participate in the method for introducing the alkenyl group, as in methods (A-a) and (A-b), preferably, the vinyl polymer is synthesized by living radical polymerization. In view that easier control is enabled, method (A-b) is more preferable.

When the alkenyl group is introduced by conversion of the halogen of the vinyl polymer having at least one highly reactive carbon-halogen bond, preferably, a vinyl polymer having at least one highly reactive carbon-halogen bond at its end is used, the vinyl polymer being obtained by radical polymerization (atom transfer radical polymerization) of a vinyl monomer using an organic halide or halogenated sulfonyl compound having at least one highly reactive carbon-halogen bond as an initiator and a transition metal complex as a catalyst. In view that easier control is enabled, method (A-f) is more preferable.

Furthermore, the crosslinkable silyl group-containing hydrosilane compound is not particularly limited. Typical examples thereof include compounds represented by general formula (13):

H-[Si(R⁹)_{2-b}(Y)_{b}O]ₘ-Si(R¹⁰)₃₋ₐ(Y)ₐ (13)

{wherein R⁹ and R¹⁰ each represent an alkyl group having 1 to 20 carbon atoms, an aryl group having 6 to 20 carbon atoms, an aralkyl group having 7 to 20 carbon atoms, or a triorganosiloxy group represented by (R')₃SiO- (wherein R' represents a monovalent hydrocarbon group having 1 to 20 carbon atoms, and three R's may be the same or different); when two or more R⁹s or R¹⁰s are present, they may be the same or different; Y represents a hydroxyl group or a hydrolyzable group; when two or more Ys are present, they may be the same or different; a is 0, 1, 2, or 3; b is 0, 1, or 2; m is an integer of 0 to 19; and the relationship
a + mb ≥ 1 is satisfied}.

Among these hydrosilane compounds, in particular, a crosslinkable group-containing compound represented by general formula (14):

H-Si(R¹⁰)₃₋ₐ(Y) ₐ (14)

(wherein R¹⁰, Y, and a are the same as those described above) is preferable from the standpoint of ease of availability.

When the crosslinkable silyl group-containing hydrosilane compound is added to the alkenyl group, a transition metal catalyst is usually used. Examples of the transition metal catalyst include elemental platinum, solid platinum dispersed in a carrier, such as alumina, silica, or carbon black, chloroplatinic acid, complexes of chloroplatinic acid and alcohols, aldehydes, ketones, or the like, platinum-olefin complexes, and platinum(0)-divinyltetramethyldisiloxane complexes. Examples of the catalyst other than platinum compounds include RhCl(PPh₃)₃, RhCl₃, RuCl₃, IrCl₃, FeCl₃, AlCl₃, PdCl₂·H₂O, NiCl₂, and TiCl₄.

Examples of the method for producing the vinyl polymer having at least one hydroxyl group used in methods (B) and (A-g) to (A-j) will be described below, although not limited thereto.
(B-a) Method in which a compound having both a polymerizable alkenyl group and a hydroxyl group per molecule, such as the one represented by general formula (15), is used as a second monomer in the synthesis of a vinyl polymer by radical polymerization.

   H₂C=C(R¹⁴)-R¹⁵-R¹⁶-OH (15)

   (wherein R¹⁴, R¹⁵, and R¹⁶ are the same as those described above.)
   The timing of subjecting the compound having both a polymerizable alkenyl group and a hydroxyl group per molecule to reaction is not particularly limited. However, when rubber-like properties are expected in living radical polymerization in particular, such a compound is preferably subjected to reaction as the second monomer at the final stage of the polymerization reaction or after the completion of reaction of a predetermined monomer.
(B-b) Method in which an alkenyl alcohol, such as 10-undecenol, 5-hexenol, or allyl alcohol, is subjected to reaction at the final stage of the polymerization reaction or after the completion of reaction of a predetermined monomer in the synthesis of a vinyl polymer by living radical polymerization.
(B-c) Method in which a vinyl monomer is radically polymerized using a large amount of a hydroxyl group-containing chain transfer agent, such as a hydroxyl group-containing polysulfide, for example, as described in Japanese Unexamined Patent Application Publication No. 5-262808.
(B-d) Method in which a vinyl monomer is radically polymerized using hydrogen peroxide or a hydroxyl group-containing initiator, for example, as described in Japanese Unexamined Patent Application Publication No. 6-239912 or 8-283310.
(B-e) Method in which a vinyl monomer is radically polymerized using an alcohol in excess, for example, as described in Japanese Unexamined Patent Application Publication No. 6-116312.
(B-f) Method in which the halogen of a vinyl polymer having at least one highly reactive carbon-halogen bond is subjected to hydrolysis or reaction with a hydroxyl group-containing compound to introduce a hydroxyl group into the terminus, for example, by a process described in Japanese Unexamined Patent Application Publication No. 4-132706.
(B-g) Method in which a vinyl polymer having at least one highly reactive carbon-halogen bond is allowed to react with a stabilized, hydroxyl group-containing carbanion, such as the one represented by general formula (16), for substitution of the halogen:

   M⁺C⁻(R¹⁸) (R¹⁹)-R²⁰-OH (16)

   (wherein R¹⁸, R¹⁹, and R²⁰ are the same as those described above).
   As the electron-attracting groups represented by R¹⁸ and R¹⁹, -CO₂R, -C(O)R, and -CN are particularly preferable.
(B-h) Method in which a vinyl polymer having at least one highly reactive carbon-halogen bond is treated with an elemental metal, such as zinc, or an organometallic compound to prepare an enolate anion, and then the enolate anion is allowed to react with an aldehyde or a ketone.
(B-i) Method in which a vinyl polymer having at least one highly reactive carbon-halogen bond is allowed to react with a hydroxyl group-containing oxy-anion or carboxylate anion, such as the one represented by general formula (17) or (18), for substitution of the halogen:

   HO-R²¹-O⁻M⁺ (17)

   (wherein R²¹ and M⁺ are the same as those described above),

   HO-R²²-C(O)O⁻M⁺ (18)

   (wherein R²² and M⁺ are the same as those described above).
(B-j) Method in which a compound having both an alkenyl group with low polymerizability and a hydroxyl group per molecule, as a second monomer, is subjected to reaction at the final stage of the polymerization reaction or after the completion of reaction of a predetermined monomer in the synthesis of a vinyl polymer by living radical polymerization.

Such a compound is not particularly limited, and examples thereof include a compound represented by general formula (19):

H₂C=C(R¹⁴)-R²¹-OH (19)

(wherein R¹⁴ and R²¹ are the same as those described above).

Although the compound represented by general formula (19) is not particularly limited, from the standpoint of ease of availability, an alkenyl alcohol, such as 10-undecenol, 5-hexenol, or allyl alcohol, is preferable.

In the present invention, when a halogen does not directly participate in the method for introducing the hydroxyl group, as in methods (B-a) to (B-e) and (B-j), preferably, the vinyl polymer is synthesized by living radical polymerization. In view that easier control is enabled, method (B-b) is more preferable.

When the hydroxyl group is introduced by conversion of the halogen of the vinyl polymer having at least one highly reactive carbon-halogen bond, preferably, a vinyl polymer having at least one highly reactive carbon-halogen bond at its end is used, the vinyl polymer being obtained by radical polymerization (atom transfer radical polymerization) of a vinyl monomer using an organic halide or halogenated sulfonyl compound as an initiator and a transition metal complex as a catalyst. In view that easier control is enabled, method (B-i) is more preferable.

Examples of the compound having groups reactable with the hydroxyl group, such as a crosslinkable silyl group and an isocyanato group, per molecule include γ-isocyanatopropyltrimethoxysilane, γ-isocyanatopropylmethyldimethoxysilane, and γ-isocyanatopropyltriethoxysilane. A commonly known catalyst used for urethane formation reaction may be used if necessary.

Examples of the compound having both a polymerizable alkenyl group and a crosslinkable silyl group per molecule used in method (C) include a compound represented by general formula (20), for example, trimethoxysilylpropyl (meth)acrylate or methyldimethoxysilylpropyl (meth)acrylate.

H₂C=C(R¹⁴)-R¹⁵-R²³-[Si (R⁹)_{2-b}(Y)_{b}O]ₘ-Si(R¹⁰)₃₋ₐ(Y)ₐ (20)

(wherein R⁹, R¹⁰, R¹⁴, R¹⁵, Y, a, b, and m are the same as above; and R²³ represents a direct bond or a divalent organic group having 1 to 20 carbon atoms, which may contain one or more ether bonds.)

The timing of subjecting the compound having both a polymerizable alkenyl group and a crosslinkable silyl group per molecule to reaction is not particularly limited. However, when rubber-like properties are expected in living radical polymerization in particular, such a compound is preferably subjected to reaction as the second monomer at the final stage of the polymerization reaction or after the completion of reaction of a predetermined monomer.

Examples of the crosslinkable silyl group-containing chain transfer agent used in the chain transfer polymerization process in method (D) include crosslinkable silyl group-containing mercaptans and crosslinkable silyl group-containing hydrosilanes as disclosed in Japanese Examined Patent Application Publication Nos. 3-14068 and 4-55444.

One example of the synthesis method of the vinyl polymer having at least one highly reactive carbon-halogen bond used in method (E) is the atom transfer radical polymerization in which an organic halide or the like is used as an initiator and a transition metal complex is used as a catalyst, although not limited thereto. Examples of the compound having a crosslinkable silyl group and a stabilized carbanion per molecule include a compound represented by general formula (21):

M⁺C⁻(R¹⁸) (R¹⁹)-R²⁴-C(H)(R²⁵)-CH₂-[Si(R⁹)_{2-b}(Y)_{b}O]ₘ-Si(R¹⁰)₃₋ₐ(Y)ₐ (21)

(wherein R⁹, R¹⁰, R¹⁸, R¹⁹, Y, a, b, and m are the same as those described above; R²⁴ represents a direct bond or a divalent organic group having 1 to 10 carbon atoms, which may contain one or more ether bonds; and R²⁵ represents hydrogen, an alkyl group having 1 to 10 carbon atoms, an aryl group having 6 to 10 carbon atoms, or an aralkyl group having 7 to 10 carbon atoms).

As the electron-attracting groups represented by R¹⁸ and R¹⁹, -CO₂R, -C(O)R, and -CN are particularly preferable.

### «Vinyl polymer (II) whose main chain is produced by free radical polymerization»

### <Main chain>

The vinyl monomer constituting the main chain of the vinyl polymer (II) of the present invention is not particularly limited, and various types of vinyl monomer can be used. All of the vinyl monomers described above in the item «Vinyl polymer (I) whose main chain is produced by living radical polymerization» and polymers obtained therefrom can be suitably used.

The main chain of the vinyl polymer (II) is preferably produced by polymerizing mainly at least one monomer selected from the group consisting of (meth)acrylic monomers, acrylonitrile monomers, aromatic vinyl monomers, fluorine-containing vinyl monomers, and silicon-containing vinyl monomers, although not limited thereto. Here, "mainly" means that among the monomer units constituting the vinyl polymer, the amount of the at least one monomer described above is 50 mole percent or more, and preferably 70 mole percent or more.

Among these monomers, in view of physical properties of the resulting product, etc., preferred are styrene monomers and (meth)acrylic monomers. More preferred are acrylate monomers and methacrylate monomers. In the present invention, these preferred monomers may be copolymerized or block-copolymerized with other monomers. In such a case, preferably, the content of these preferred monomers is 40% by weight or more. Additionally, in the expression described above, for example, (meth)acrylic acid represents acrylic acid and/or methacrylic acid. These monomers may be used alone or two or more of these monomers may be copolymerized.

In addition to the monomer units described above, such as the (meth)acrylate monomers, the vinyl polymer (II) may contain monomer units copolymerizable with these. Examples thereof include monomers containing carboxylic acid groups, such as (meth)acrylic acid; monomers containing amido groups, such as (meth)acrylamide and N-methylol (meth)acrylamide; monomers containing epoxy groups, such as glycidyl (meth)acrylate; and monomers containing amino groups, such as diethylaminoethyl (meth)acrylate and aminoethyl vinyl ether, from which copolymerization effects are expected in view of moisture curability and curing properties in the inner regions. Other examples include monomer units derived from acrylonitrile, styrene, α-methylstyrene, alkyl vinyl ethers, vinyl chloride, vinyl acetate, vinyl propionate, and ethylene.

The number-average molecular weight of the vinyl polymer (II) of the present invention is not particularly limited. The number-average molecular weight determined by gel permeation chromatography is preferably 500 to 100,000 in view of ease of handling, and more preferably 5,000 to 30,000 in view of excellent weatherability and workability of the resulting cured object.

In the application in which higher strength is required, the glass transition temperature of the vinyl polymer (II) is desirably higher, preferably higher than room temperature or working temperature. Although not limited thereto, the vinyl polymer (II) is more preferably mainly composed of a methacrylic monomer or methyl (meth)acrylate monomer, and still more preferably mainly composed of a methyl methacrylate monomer.

### <Synthesis method of main chain>

In the present invention, the synthesis method of the vinyl polymer (II) is limited to free radical polymerization, which will be described below.

The vinyl monomer constituting the main chain of the vinyl polymer (II) of the present invention is not particularly limited, and various known monomers can be used. Examples thereof include methyl (meth)acrylate, ethyl (meth)acrylate, n-propyl (meth)acrylate, n-butyl (meth)acrylate, isobutyl (meth)acrylate; tert-butyl (meth)acrylate, n-hexyl (meth)acrylate, heptyl (meth)acrylate, 2-ethylhexyl (meth)acrylate, nonyl (meth)acrylate, decyl (meth)acrylate, undecyl (meth)acrylate, lauryl (meth)acrylate, tridecyl (meth)acrylate, myristyl (meth)acrylate, cetyl (meth)acrylate, stearyl (meth)acrylate, behenyl (meth)acrylate, and biphenyl (meth)acrylate.

The main chain of the vinyl polymer (II) of the present invention can be synthesized by an ordinary vinyl polymerization method, for example, solution polymerization using radical reactions. The polymerization is usually performed by adding a radical initiator, a chain transfer agent, etc. to the monomer described above to allow reaction to take place at 50°C to 150°C.

Examples of the radical initiator include azo initiators, such as 2,2'-azobisisobutyronitrile, 2,2'-azobis(2-methylbutyronitrile), 4,4'-azobis(4-cyanovaleric) acid, 1,1'-azobis(1-cyclohexanecarbonitrile), azobisisobutyroamidine hydrochloride, and 2,2'-azobis(2,4-dimethylvaleronitrile); and organic peroxide initiators, such as benzoyl peroxide and di-tert-butyl peroxide. From the standpoints of insusceptibility to the solvent used for polymerization, low risk of explosion, etc., azo initiators are preferably used.

Examples of the chain transfer agent include mercaptans, such as n-dodecyl mercaptan, tert-dodecyl mercaptan, lauryl mercaptan, γ-mercaptopropyltrimethoxysilane, γ-mercaptopropylmethyldimethoxysilane, γ-mercaptopropyltriethoxysilane, and γ-mercaptopropylmethyldiethoxysilane; and halogen-containing compounds.

The polymerization may be carried out in a solvent. Preferred examples of the solvent include nonreactive solvents, such as ethers, hydrocarbons, and esters.

### <Functional group>

The vinyl polymer (II) of the present invention is a vinyl polymer having a crosslinkable silyl group in its molecule.

### Number of crosslinkable silyl groups

The number of crosslinkable silyl groups in the vinyl polymer (II) is not particularly limited. From the standpoints of curability of the resulting composition and physical properties of the resulting cured object, the average number of crosslinkable silyl groups per molecule is preferably at least one, more preferably 1.1 or more, and still more preferably 1.2 or more, and even more preferably 1.5 or more.

The functional groups will be described below.

### Crosslinkable silyl group

The crosslinkable silyl group of the present invention can be exemplified by a group represented by general formula (6):

-[Si(R⁹)_{2-b}(Y)_{b}O]ₘ-Si(R¹⁰)₃₋ₐ(Y)ₐ (6)

{wherein R⁹ and R¹⁰ each represent an alkyl group having 1 to 20 carbon atoms, an aryl group having 6 to 20 carbon atoms, an aralkyl group having 7 to 20 carbon atoms, or a triorganosiloxy group represented by (R')₃SiO- (wherein R' represents a monovalent hydrocarbon group having 1 to 20 carbon atoms, and three R's may be the same or different); when two or more R⁹s or R¹⁰s are present, they may be the same or different; Y represents a hydroxyl group or a hydrolyzable group; when two or more Ys are present, they may be the same or different; a is 0, 1, 2, or 3; b is 0, 1, or 2; m is an integer of 0 to 19; and the relationship
a + mb ≥ 1 is satisfied}.

Examples of the hydrolyzable group include a hydrogen atom, an alkoxy group, an acyloxy group, a ketoximate group, an amino group, an amido group, an aminooxy group, a mercapto group, and an alkenyloxy group, which are commonly used groups. Among these, an alkoxy group, an amido group, and an aminooxy group are preferred, and from the standpoints of mild hydrolyzability and ease of handling, an alkoxy group is particularly preferred.

One to three hydrolyzable groups or hydroxyl groups can be bonded to one silicon atom, and (a + Σb) is preferably in a range of 1 to 5. When two or more hydrolyzable groups or hydroxyl groups are bonded in the crosslinkable silyl group, they may be the same or different. The number of silicon atoms constituting the crosslinkable silyl group is one or more. When silicon atoms are linked by siloxane bonding or the like, the number of silicon atoms is preferably 20 or less. In particular, a crosslinkable silyl group represented by general formula (7):

-Si(R¹⁰)₃₋ₐ(Y)ₐ (7)

(wherein R¹⁰ and Y are the same as those described above, and a is an integer of 1 to 3) is preferable because of ease in availability.

Although not particularly limited, in consideration of curability, a is preferably 2 or more. A polymer having a group in which a is 3 (e.g., trimethoxy functional group) has a higher curing rate than a polymer having a group in which a is 2 (e.g., dimethoxy functional group). In some cases, a polymer having a group in which a is 2 exhibits superior storage stability and mechanical properties (elongation, etc.). In order to achieve a balance between curability and physical properties, a group in which a is 2 (e.g., dimethoxy functional group) and a group in which a is 3 (e.g., trimethoxy functional group) may be used together.

### <Crosslinkable silyl group introduction method>

Examples of the method for introducing the crosslinkable silyl group into the vinyl polymer (II) include a method in which a compound having both a polymerizable unsaturated bond and a crosslinkable silyl group is copolymerized with (meth)acrylate monomer units. As the compound having both a polymerizable unsaturated bond and a crosslinkable silyl group, a monomer represented by general formula (22) :

CH₂=C(R³⁰)COOR³¹- [Si (R¹_{2-b})(Y_{b})O]ₘSi (R²₃₋ₐ)Yₐ (22)

(wherein R³⁰ represents a hydrogen atom or a methyl group; R³¹ represents a divalent alkylene group having 1 to 6 carbon atoms; and R¹, R², Y, a, b, and m are the same as those described above), or a monomer represented by general formula (23):

CH₂=C(R³⁰)-[Si(R¹_{2-b})(Y_{b})O]ₘSi(R²₃₋ₐ)Yₐ (23)

(wherein R³⁰, R¹, R² Y, a, b, and m are the same as those described above) may be exemplified.
Examples thereof include γ-methacryloxypropylpolyalkoxysilanes, such as γ-methacryloxypropyltrimethoxysilane, γ-methacryloxypropylmethyldimethoxysilane, and γ-methacryloxypropyltriethoxysilane; γ-acryloxypropylpolyalkoxysilanes, such as γ-acryloxypropyltrimethoxysilane, γ-acryloxypropylmethyldimethoxysilane, and γ-acryloxypropyltriethoxysilane; and vinylalkylpolyalkoxysilanes, such as vinyltrimethoxysilane, vinylmethyldimethoxysilane, and vinyltriethoxysilane.

### <Ratio between vinyl polymer (I) whose main chain is produced by living radical polymerization and vinyl polymer (II) whose main chain is produced by free radical polymerization>

The weight ratio between the vinyl polymer (I) whose main chain is produced by living radical polymerization and the vinyl polymer (II) whose main chain is produced by free radical polymerization is 1:99 to 99:1, and preferably 10:90 to 90:10. If the ratio of the vinyl polymer (I) is decreased, although adhesion strength and the like improve, viscosity increases, resulting in a decrease in workability or a decrease in rubber elasticity after curing. If the ratio of the vinyl polymer (II) is decreased, the opposite will occur. Therefore, setting in the range described above is preferable.

### <<Curable composition>>

In the curable composition of the present invention, there may be a case in which a curing catalyst and a curing agent are required. Depending on the desired physical properties, various types of compounding agents may be added to the curable composition.

### <Curing catalyst/curing agent

Crosslinkable silyl group-containing polymers are crosslinked and cured by forming siloxane bonds in the presence or absence of any of known various types of condensation catalyst. Depending on the molecular weights and main chain structures of the polymers, cured objects with a wide variety of properties, for example, from rubber-like properties to resin-like properties, can be produced.

Examples of such a condensation catalyst include tetravalent tin compounds, such as dialkyltin dicarboxylates (e.g., dibutyltin dilaurate, dibutyltin diacetate, dibutyltin diethylhexanoate, dibutyltin dioctoate, dibutyltin dimethylmaleate, dibutyltin diethylmaleate, dibutyltin dibutylmaleate, dibutyltin diisooctylmaleate, dibutyltin ditridecylmaleate, dibutyltin dibenzylmaleate, dibutyltin maleate, dioctyltin diacetate, dioctyltin distearate, dioctyltin dilaurate, dioctyltin diethylmaleate, and dioctyltin diisooctylmaleate), dialkyltin alkoxides (e.g., dibutyltin dimethoxide and dibutyltin diphenoxide), intramolecular coordinating derivatives of dialkyltin (e.g., dibutyltin diacetylacetonate and.dibutyltin diethylacetoacetate), reaction products of dialkyltin oxides (e.g., dibutyltin oxide and dioctyltin oxide) and ester compounds (e.g., dioctyl phthalate, diisodecyl phthalate, and methyl maleate), reaction products of dialkyltin oxides and silicate compounds (e.g., dibutyltin bistriethoxy silicate and dioctyltin bistriethoxy silicate), and oxy-derivatives of these dialkyltin compounds (stannoxanes); divalent tin compounds, such as tin octylate, tin naphthenate, tin stearate, and tin versatate, and reaction products and mixtures of these compounds and amine compounds (e.g., laurylamine) which will be described below; monoalkyltins, such as monobutyltin compounds (e.g., monobutyltin tris octoate and monobutyltin triisopropoxide) and monooctyltin compounds; titanate esters, such as tetrabutyl titanate, tetrapropyl titanate, tetra(2-ethylhexyl) titanate, and isopropoxytitanium bis(ethylacetoacetate); organoaluminum compounds, such as aluminum trisacetylacetonate, aluminum trisethylacetoacetate, and diisopropoxyaluminum ethylacetoacetate; metal salts of carboxylic acids (e.g., 2-ethylhexanoic acid, neodecanoic acid, versatic acid, oleic acid, and naphthenic acid), such as bismuth carboxylate, iron carboxylate, titanium carboxylate, lead carboxylate, vanadium carboxylate, zirconium carboxylate, calcium carboxylate, potassium carboxylate, barium carboxylate, manganese carboxylate, cerium carboxylate, nickel carboxylate, cobalt carboxylate, zinc carboxylate, and aluminum carboxylate, and reaction products and mixtures of these compounds and amine compounds (e.g., laurylamine) which will be described below; chelate compounds, such as zirconium tetraacetylacetonate, zirconium tributoxyacetylacetonate, zirconium dibutoxy diacetylacetonate, zirconium acetylacetonate bis(ethylacetoacetate), and titanium tetraacetylacetonate; aliphatic primary amines, such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines, such as dimethylamine, diethylamine, dipropylamine, diisopropylamine, dibutylamine, diamylamine, dioctylamine, di(2-ethylhexyl)amine, didecylamine, dilaurylamine, dicetylamine, distearylamine, methylstearylamine, ethylstearylamine, and butylstearyl; aliphatic tertiary amines, such as triamylamine, trihexylamine, and trioctylamine; aliphatic unsaturated amines, such as triallylamine and oleylamine; aromatic amines, such as laurylaniline, stearylaniline, and triphenylamine; other amines, such as monoethanolamine, diethanolamine, triethanolamine, diethylenetriamine, triethylenetetramine, oleylamine, cyclohexylamine, benzylamine, diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, and 1,8-diazabicyclo(5,4,0)undecene-7 (DBU), or salts of these amine compounds with carboxylic acids or the like; reaction products and mixtures of amine compounds and organotin compounds, such as a reaction product and a mixture of laurylamine and tin octylate; low-molecular-weight polyamide resins obtained from excess polyamines and polybasic acids; reaction products of excess polyamines with epoxy compounds; and γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, N-(β-aminoethyl)aminopropyltrimethoxysilane, N-(β-aminoethyl)aminopropylmethyldimethoxysilane, N-(β-aminoethyl)aminopropyltriethoxysilane, N-(β-aminoethyl)aminopropylmethyldiethoxysilane, N-(β-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane. Other examples include silanol condensation catalysts, such as amino group-containing silane coupling agents, i.e., modified derivatives of the compounds described above (e.g., amino-modified silyl polymers, silylated amino polymers, unsaturated amino silane complexes, phenylamino long-chain alkylsilanes, and aminosilylated silicones), and other known silanol condensation catalysts, such as acidic catalysts (e.g., fatty acids, such as versatic acid, and organic acidic phosphates) and basic catalysts.

Examples of the organic acidic phosphate which is an acidic catalyst include, but are not limited to, (CH₃O)₂-P(=O)(-OH), (CH₃O) -P (=O) (-OH)₂, (C₂H₅O)₂-P(=O) (-OH), (C₂H₅O) -P (=O) (-OH)₂, (C₃H₇O)₂-P(=O)(-OH), (C₃H₇O) P (=O)(-OH)₂₀ (C₄H₉O)₂-P(O)(-OH), (C₄H₉O)-P(=O)(-OH)₂, (C₈H₁₇O)₂-P(=O)(-OH), (C₈H₁₇O)-P(=O) (-OH)₂, (C₁₀H₂₁O)₂ - P(=O)(-OH),
(C₁₀H₂₁O)-P(=O)(-OH)₂, (C₁₃H₂₇O)₂-P(=O)(-OH),
(C₁₃H₂₇O)-P(=O) (-OH)₂, (C₁₆H₃₃O)₂-P(=O)(-OH),
(C₁₆H₃₃O) -P (=O)(-OH)₂, (HO-C₆H₁₂O)₂-P(=O)(-OH),
(HO-C₆H₁₂O) -P (=O) (-OH)₂, (HO-C₈H₁₆O) -P (=O) (-OH),
(HO-C₈H₁₆0) -P (=O) (-OH)₂, [(CH₂OH)(CHOH)O]₂-P(=O) (-OH),
[(CH₂OH (CHOH)O] -P (=O)(-OH)₂, [(CH₂OH) (CHOH)C₂H₄O]₂-P(=O) (-OH), and [(CH₂OH)(CHOH)C₂H₄O] -P(=O)·(-OH)₂.

Combinations of organic acids and amines are more preferable from the standpoint that catalytic activity is enhanced, and thus the amount of use can be decreased. Among the combinations of organic acids and amines, those of acidic phosphates and amines and those of organic carboxylic acids and amines, in particular, those of organic acidic phosphates and amines and those of aliphatic carboxylic acids and amines, can further enhance catalytic activity, thus being preferable in view of fast curing.

These catalysts can be used alone or in combination. The condensation catalyst is used in an amount of preferably about 0.01 to 20 parts by weight, and more preferably 0.5 to 10 parts by weight, based on 100 parts by weight of the vinyl polymer. If the amount of the silanol condensation catalyst used is lower than the range described above, the curing rate may decrease and the curing reaction may not sufficiently proceed. On the other hand, if the amount of the silanol condensation catalyst used exceeds the range, heat generation or foaming occurs locally during curing, and it becomes difficult to obtain satisfactory cured objects, and the pot life is excessively shortened, which is undesirable in view of workability. Although not particularly limited, tin-based curing catalysts provide desirable results in view that curability can be easily controlled.

Although not particularly limited, when a one-part composition is produced, as will be described below, in view of the curing rate and storage stability of the composition, tetravalent tin is preferable in the case of tin-based curing catalysts. Combinations of divalent tin and organic amines, and non-tin compounds can also be used.

Furthermore, although not particularly limited, in the application of the sealant for siding boards or the like, the cured object is susceptible to stress relaxation without distinction between one-part system and two-part system, and therefore tetravalent tin is preferable from the standpoint that an adherend is not damaged and detachment does not easily occur at an adhesion interface.

Recently, environmental issues have been focused on, and tin catalysts may fall into disfavor. In such a case, non-tin catalysts, such as bismuth carboxylate and titanium carboxylate, may be selected.

In the curable composition of the present invention, in order to further enhance the activity of a condensation catalyst, as well as an amine compound, the amino-group containing silane coupling agent may be used as a promoter. The amino-group containing silane coupling agent refers to a compound that contains a group including a silicon atom to which a hydrolyzable group is bonded (hereinafter referred to as a "hydrolyzable silyl group") and an amino group. As the hydrolyzable group, of which examples have been described above, a methoxy group, an ethoxy group, or the like is preferable in view of the hydrolysis rate. The number of hydrolyzable groups is preferably two or more, in particular, three or more.

The amine compound is used in an amount of preferably about 0.01 to 50 parts by weight, and more preferably 0.1 to 20 parts by weight, based on 100 parts by weight of the crosslinkable silyl group-containing polymer. If the amount of the amine compound used is less than 0.01 parts by weight, the curing rate may decrease and the curing reaction may not sufficiently proceed. On the other hand, if the amount of the amine compound used exceeds 30 parts by weight, the pot life may be excessively shortened, which is undesirable in view of workability.

These amine compounds may be used alone or in combination.

Furthermore, a silicon compound which does not contain an amino group and a silanol group may be incorporated as a promoter. Preferred examples of the silicon compound include, but are not limited to, phenyltrimethoxysilane, phenylmethyldimethoxysilane, phenyldimethylmethoxysilane, diphenyldimethoxysilane, diphenyldiethoxysilane, and triphenylmethoxysilane. In particular, diphenyldimethoxysilane and diphenyldiethoxysilane are most preferable because of low cost and ease of availability.

The silicon compound is used in an amount of preferably about 0.01 to 20 parts by weight, and more preferably 0.1 to 10 parts, based on 100 parts by weight of the crosslinkable silyl group-containing polymer. If the amount of the silicon compound used is lower than the range described above, the effect of accelerating the curing reaction may be decreased. On the other hand, if the amount of the silicon compound used exceeds the range, the hardness and tensile strength of the cured object may be decreased.

The types and amounts of the curing catalyst and curing agent can be changed depending on purposes and applications to control curability and mechanical and physical properties in the present invention.
Furthermore, the types and amounts of the curing catalyst and curing agent can be changed depending on the reactivity of the silyl group of the crosslinkable silyl group-containing polymer. When the reactivity is high, a small amount in a range of 0.01 to 1 part by weight can provide sufficient curing.

The types and amounts of the curing catalyst and curing agent can be selected depending on the type of Y and the number a of the vinyl polymer of the present invention, and the curability and mechanical and physical properties in the present invention can be controlled depending on purposes and applications. When Y is an alkoxy group, reactivity increases as the number of carbon atoms decreases. Furthermore, as the number a increases, reactivity increases, and thus a small amount can provide sufficient curing.

### <Dehydrating agent>

In a curable composition, viscosity rise and gelation proceed during storage due to the water or the like contained during the production stage, which may result in a problem with workability during use. Furthermore, by using the curable composition in which viscosity rise and gelation have proceeded, the physical properties of the resulting cured object may be degraded, and thus the intended sealing properties or the like may be impaired. Namely, storage stability of the curable composition may be degraded.

One method for improving the storage stability of the curable composition is to decrease the water content of the curable composition by azeotropic dehydration. For example, a volatile organic compound having a minimum azeotropic point for water is added in an amount of about 0.1 to 10 parts by weight. After mixing homogeneously, an azeotropic composition containing water and the organic compound is removed out of the system by suction with a vacuum pump while heating the mixture at about 50°C to 90°C. Examples of the volatile organic compound having the minimum azeotropic point for water include halides, such as methylene chloride, chloroform, carbon tetrachloride, and trichloroethylene; alcohols, such as ethanol, allyl alcohol, 1-propanol, and butanol; esters, such as ethyl acetate and methyl propionate; ketones, such as methyl ethyl ketone and 3-methyl-2-butanone; ethers, such as ethyl ether and isopropyl ether; and hydrocarbons, such as benzene, toluene, xylene, and hexane. However, in this method, since a vaporization operation is included, consideration is required with respect to other volatile compounding agents, and the volatile organic compound used for azeotropic dehydration must be treated and recovered. Consequently, in some cases, any of the dehydrating agents described below is preferably incorporated.

As described above, in order to improve storage stability, the composition of the present invention can be incorporated with a dehydrating agent for removing the water contained in the composition. Examples of the dehydrating agent include inorganic solids, such as phosphorus pentoxide, sodium bicarbonate, sodium sulfate (anhydrous sodium sulfate), and molecular sieves. In some cases, after addition of any of these solid dehydrating agents, the resulting liquid tends to be acidic or basic to easily cause condensation, and thus contrary to expectations, storage stability is decreased, or workability is decreased because of the subsequent need of removal of the solid, etc. Therefore, liquid hydrolyzable ester compounds, which will be described below, are preferable. Examples of the hydrolyzable ester compound include trialkyl orthoformates, such as trimethyl orthoformate, triethyl orthoformate, tripropyl orthoformate, and tributyl orthoformate; trialkyl orthoacetates, such as trimethyl orthoacetate, triethyl orthoacetate, tripropyl orthoacetate, and tributyl orthoacetate; and others selected from the group consisting of these compounds.

Examples of other hydrolyzable ester compounds include hydrolyzable organosilicon compounds represented by the formula R₄₋ₙSiYₙ (wherein Y represents a hydrolyzable group; R represents an organic group which may contain a functional group; n is an integer of 1 to 4, and preferably 3 or 4). Specific examples thereof include silane compounds, such as vinyltrimethoxysilane, methyltrimethoxysilane, methyltriethoxysilane, ethyltriethoxysilane, phenyltriethoxysilane, methyltriacetoxysilane, tetramethyl orthosilicate (tetramethoxysilane or methyl silicate), tetraethyl orthosilicate (tetraethoxysilane or ethyl silicate), tetrapropyl orthosilicate, and tetrabutyl orthosilicate, or partially hydrolyzed condensates of these compounds; and silane coupling agents, such as γ-aminopropyltrimethoxysilane, γ-glycidoxypropyltrimethoxysilane, N-(β-aminoethyl)-γ-aminopropyltrimethoxysilane, γ-acryloxypropyltrimethoxysilane, γ-methacryloxypropyltrimethoxysilane, γ-glycidoxypropyltrimethoxysilane, γ-mercaptopropyltrimethoxysilane, and N-(β-aminoethyl)-γ-aminopropylmethyldimethoxysilane, or partially hydrolyzed condensates of these compounds. These compounds may be used alone or in combination.

The storage stability improver is used in an amount of 0.1 to 30 parts by weight, preferably 0.3 to 20 parts by weight, and more preferably 0.5 to 10 parts by weight, based on 100 parts by weight of the crosslinkable silyl group-containing vinyl polymer.

The storage stability improver is added preferably after the curable composition is dehydrated. However, the addition may be made without dehydrating the curable composition.

### <Adhesion-imparting agent>

In the composition of the present invention, a silane coupling agent or an adhesion-imparting agent other than the silane coupling agent may be incorporated. By the incorporation of the adhesion-imparting agent, it is possible to reduce the risk that the sealant is detached from an adherend, such as a siding board, due to a change in joint width by external force. Furthermore, depending on the case, use of a primer for improving adhesion becomes unnecessary, thus simplifying the operation. As the silane coupling agent, silane coupling agents each containing a functional group, such as an amino group, a mercapto group, an epoxy group, a carboxyl group, a vinyl group, an isocyanato group, an isocyanurate group, or halogen, can be exemplified. Specific examples thereof include isocyanato group-containing silanes, such as γ-isocyanatopropyltrimethoxysilane, γ-isocyanatopropyltriethoxysilane, γ-isocyanatopropylmethyldiethoxysilane, and γ-isocyanatopropylmethyldimethoxysilane; amino group-containing silanes, such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane; mercapto group-containing silanes, such as γ-mercaptopropyltrimethoxysilane, γ-mercaptopropyltriethoxysilane, γ-mercaptopropylmethyldimethoxysilane, and γ-mercaptopropylmethyldiethoxysilane; epoxy group-containing silanes, such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; carboxysilanes such as β-carboxyethyltriethoxysilane, β-carboxyethylphenylbis(2-methoxyethoxy)silane, and N-β-(carboxymethyl)aminoethyl-γ-aminopropyltrimethoxysilane; vinyl unsaturated group-containing silanes, such as vinyltrimethoxysilane, vinyltriethoxysilane, γ-methacryloyloxypropylmethyldimethoxysilane, and γ-acryloyloxypropylmethyltriethoxysilane; halogen-containing silanes, such as γ-chloropropyltrimethoxysilane; isocyanurate silanes, such as tris(trimethoxysilyl) isocyanurate; and polysulfanes, such as bis(3-triethoxysilylpropyl)tetrasulfane. Furthermore, reaction products of the amino group-containing silanes and the epoxy group-containing silanes, reaction products of the amino group-containing silanes and the acryloyloxy group-containing silanes, and reaction products of the amino group-containing silanes and the isocyanato group-containing silanes as described above, can be used. Also usable as the silane coupling agent are modified derivatives of these, for example, amino-modified silyl polymers, silylated amino polymers, unsaturated amino silane complexes, phenylamino long-chain alkylsilanes, aminosilylated silicones, block isocyanatosilane, and silylated polyesters. Furthermore, ketimine compounds obtained by reaction of the amino group-containing silanes and ketone compounds as described above, such as methyl isobutyl ketone, can also be used as the silane coupling agent.

In the present invention, the silane coupling agent is used usually in an amount of 0.1 to 20 parts by weight, and particularly preferably 0.5 to 10 parts by weight, based on 100 parts by weight of the crosslinkable silyl group-containing polymer. With respect to the effect of the silane coupling agent incorporated into the curable composition of the present invention, remarkable adhesion-improving effects are shown under non-primer or primer-treatment conditions when the composition is applied to various adherends, for example, inorganic bases, such as glass, aluminum, stainless steel, zinc, copper, and mortar, and organic bases, such as polyvinyl chloride, acrylics, polyesters, polyethylenes, polypropylenes, and polycarbonates. When the composition is used under non-primer conditions, the effects of improving adhesion to various adherends are particularly remarkable.

Specific examples of the adhesion-imparting agent other than the silane coupling agent include, but are not limited to, epoxy resins, phenolic resins, linear or branched block copolymers, such as polystyrene-polybutadiene-polystyrene, polystyrene-polyisoprene-polystyrene, polystyrene-polyisoprene/butadiene copolymer-polystyrene, polystyrene-polyethylene/propylene copolymer-polystyrene, polystyrene-polyethylene/butylene copolymer-polystyrene, and polystyrene-polyisobutene-polystyrene; alkyl sulfonates, sulfur, alkyl titanates, and aromatic polyisocyanates. Epoxy resins can be used by allowing them to react with the amino group-containing silanes.

The adhesion-imparting agents described above may be used alone or in combination. By adding any of these adhesion-imparting agents to the composition, it is possible to improve adhesion to adherends. Although not particularly limited, in order to improve adhesion, in particular adhesion to a surface of a metal adherend, such as an oil pan, among the adhesion-imparting agents described above, the silane coupling agent is preferably combined in an amount of 0.1 to 20 parts by weight.

The type and amount of the adhesion-imparting agent can be selected depending on the type of Y and the number a of the vinyl polymer of the present invention, and the curability and mechanical and physical properties in the present invention can be controlled depending on purposes and applications. Since the adhesion-imparting agent particularly affects curability and elongation, the selection thereof must be carried out carefully.

### <Plasticizer>

The curable composition of the present invention may be incorporated with any of various types of plasticizers as required. If the plasticizer is used together with a filler, which will be described below, the elongation of the resulting cured object can be increased, and a large amount of filler can be mixed, thus being more advantageous. However, the plasticizer is not always required to be added. The plasticizer which can be used is not particularly limited, and for example, may be selected from the following plasticizers depending on the purposes, such as adjustment of physical properties and adjustment of aspects: phthalic acid esters, such as dibutyl phthalate, diheptyl phthalate, di(2-ethylhexyl) phthalate, diisodecyl phthalate, and butyl benzyl phthalate; nonaromatic dibasic acid esters, such as dioctyl adipate, dioctyl sebacate, dibutyl sebacate, and isodecyl succinate; aliphatic esters, such as butyl oleate and methyl acetyl ricinoleate; polyalkylene glycol esters, such as diethylene glycol dibenzoate, triethylene glycol dibenzoate, and pentaerythritol esters; phosphates, such as tricresyl phosphate and tributyl phosphate; trimellitates; polystyrenes, such as polystyrene and poly-α-methylstyrene; polybutadiene, polybutene, polyisobutylene, butadiene-acrylonitrile, and polychloroprene; chlorinated paraffins; hydrocarbons oils, such as alkyldiphenyl and partially hydrogenated terphenyl; process oils; polyethers, such as polyether polyols, e.g., polyethylene glycol, polypropylene glycol, ethylene oxide-propylene oxide copolymers, and polytetramethylene glycol, and alkyl derivatives of these polyether polyols resulting from conversion of hydroxyl groups at one end, both ends, or all ends thereof to alkylester groups, alkylether groups, or the like; epoxy group-containing plasticizers, such as epoxidized soybean oil, benzyl epoxystearate, and E-PS; polyester plasticizers obtained from a dibasic acid, such as sebacic acid, adipic acid, azelaic acid, or phthalic acid, and a dihydric alcohol, such as ethylene glycol, diethylene glycol, triethylene glycol, propylene glycol, or dipropylene glycol; and vinyl polymers obtained by polymerizing vinyl monomers by various methods, typically acrylic plasticizers.

Above all, by using a polymer plasticizer having a number-average molecular weight of 500 to 15,000, it is possible to adjust the viscosity and slump properties of the curable composition and the mechanical characteristics, such as tensile strength and elongation, of the cured object obtained by curing the composition. It is also possible to maintain the original physical properties for a longer period of time, compared with a low-molecular plasticizer which does not contain polymer components in the molecule, and it is possible to improve drying characteristics (also referred to as "paintability") when the cured object is coated with alkyd paint. Additionally, although nonlimiting, the polymer plasticizer may or may not contain a functional group.

Although the polymer plasticizer with a number-average molecular weight of 500 to 15,000 has been described above, the number-average molecular weight is preferably 800 to 10,000, and more preferably 1,000 to 8,000. If the molecular weight is too low, the plasticizer bleeds out with time due to heat or rainfall, and thus it is not possible to maintain the original physical properties for a long period of time. In some cases, paintability of alkyd paint cannot be improved. If the molecular weight is too high, viscosity increases, resulting in degradation in workability.

Among these polymer plasticizers, those which are compatible with vinyl polymers are preferable. In particular, in view of compatibility, high weatherability, and high heat resistance, vinyl polymers are preferable. Among the vinyl polymers, (meth)acrylic polymers are preferable, and acrylic polymers are more preferable. Examples of the synthesis method for such acrylic polymers include conventional solution polymerization and a method for synthesizing an acrylic polymer in the absence of a solvent. The acrylic plasticizer synthesized by the latter method is more preferable for the purpose of the present invention because the plasticizer is produced in the absence of a solvent or a chain transfer agent by high-temperature continuous polymerization (refer to USP 4,414,370, Japanese Unexamined Patent Application Publication No. 59-6207, Japanese Examined Patent application Publication No. 5-58005, Japanese Unexamined Patent Application Publication No. 1-313522, and USP 5,010,166). Examples thereof include, but are not limited to, Toagosei ARUFON UP series (UP-1000, UP-1110, UP-2000, and UP-2130), which are referred to as "SGO", (refer to The Bousui Journal, June, 2002). Of course, as another synthesis method, living radical polymerization may be used. According to this method, a polymer having a narrow molecular-weight distribution and a low viscosity can be produced, thus being preferable. Furthermore, atom transfer radical polymerization is more preferable, although not limited thereto.

Besides the vinyl polymers, if compatibility is ensured, other polymer plasticizers, for example, polyether plasticizers, may be preferable in view of high elongation characteristics or high weatherability.

The molecular-weight distribution of the polymer plasticizer is not particularly limited, but a narrow molecular-weight distribution is preferable. The molecular-weight distribution is preferably less than 1.8, more preferably 1.7 or less, still more preferably 1.6 or less, even more preferably 1.5 or less, particularly preferably 1.4 or less, and most preferably 1.3 or less.

From the standpoint of viscosity, a vinyl polymer whose main chain has a branched structure is preferable as the polymer plasticizer because it has a lower viscosity compared with other vinyl polymers with the same molecular weight. Examples thereof include vinyl polymers synthesized by the high-temperature continuous polymerization described above.

The plasticizers including the polymer plasticizers may be used alone or in combination, but are not always required. Furthermore, according to need, a polymer plasticizer is used, and within a range that does not adversely affect the physical properties, a low-molecular plasticizer may be used together. Furthermore, in the case of compositions in which the vinyl polymers of the present invention are mixed with other polymers, in view of compatibility of the mixtures, phthalic acid esters and acrylic polymers may be particularly preferred.

These plasticizers may be added during the production of the polymer.

The amount of use of the plasticizer is not limited, but is 5 to 150 parts by weight, preferably 10 to 120 parts by weight, and more preferably 20 to 100 parts by weight, based on 100 parts by weight of the crosslinkable silyl group-containing vinyl polymer. If the amount is less than 5 parts by weight, the effect of the plasticizer is not exhibited, and if the amount exceeds 150 parts by weight, the mechanical strength of the resulting cured object becomes insufficient.

### <Filler>

The curable composition of the present invention may be incorporated with various types of fillers as required. Examples of the filler include, but are not limited to, reinforcing fillers, such as wood flour, pulp, cotton chip, asbestos, glass fibers, carbon fibers, mica, walnut shell powder, chaff powder, graphite, diatomaceous earth, white clay, silica (e.g., fumed silica, precipitated silica, crystalline silica, fused silica, dolomite, silicic acid anhydride, silicic acid hydrate, and amorphous spherical silica), and carbon black; fillers, such as ground calcium carbonate, precipitated calcium carbonate, magnesium carbonate, diatomaceous earth, calcined clay, clay, talc, titanium oxide, bentonite, organic bentonite, ferric oxide, colcothar, fine aluminum powder, flint powder, zinc oxide, active zinc white, zinc powder, zinc carbonate, Shirasu balloons, glass microballoons, organic microballoons composed of phenolic resins and vinylidene chloride resins, and powdered resins, e.g., powdered PVC and powdered PMMA; and fibrous fillers, such as asbestos, glass fibers and glass filaments, carbon fibers, Kevlar fibers, and polyethylene fibers.

Among these fillers, preferred are precipitated silica, fumed silica, crystalline silica, fused silica, dolomite, carbon black, calcium carbonate, titanium oxide, talc, and the like.

In particular, in order to produce cured objects having high transparency or high strength, fillers selected from the group consisting of fumed silica, precipitated silica, silicic acid anhydride, silicic acid hydrate, carbon black, surface-treated fine calcium carbonate, crystalline silica, fused silica, calcined clay, clay, active zinc white, etc., can be mainly used. These are suitable for use in transparent sealants for construction, transparent DIY adhesives, and the like. Above all, ultrafine silica powder having a specific surface area (according to BET adsorption method) of 50 m²/g or more, usually 50 to 400 m²/g, and preferably about 100 to 300 m²/g is preferable. Silica whose surface is preliminarily subjected to hydrophobic treatment with an organosilicon compound, such as organosilane, organosilazane, or diorganocyclopolysiloxane, is more preferable.

More specific examples of the highly reinforcing silica filler include, but are not limited to, Aerosil, which is a fumed silica, of Japan Aerosil Co., Ltd., and Nipsil, which is a precipitated silica, of Nippon Silica Industrial Co., Ltd. Silica with an average particle size of 1 nm to 30 µ can be used. In particular, with respect to fumed silica, when fumed silica with an average primary particle size of 1 nm to 50 nm is used, a particularly high reinforcing effect is shown, which is preferable. In the present invention, the average particle size is determined by a sieving method. Specifically, fine particles are classified using sieves with various sieve openings (microsieves or the like), and the average particle size is defined as a value (weight-average particle size) corresponding to the sieve opening through which 50% by weight of the total fine particles subjected to measurement has passed. The composition reinforced with the filler has excellent instant fixing properties and is suitable for automobile glass glazing bonding.

Transparency can also be obtained by using powdered resins, such as powdered PMMA, as a filler.

Furthermore, in order to produce cured objects having low strength and high elongation, a filler mainly selected from the group consisting of titanium oxide, calcium carbonate, talc, ferric oxide, zinc oxide, Shirasu balloons, etc., can be used. In general, with respect to calcium carbonate, if the specific surface area is small, the effects of improving breaking strength, elongation at break, adhesiveness, and weather-resistant adhesiveness of the resulting cured objects may often be insufficient. With the increase in specific surface area, the effects of improving breaking strength, elongation at break, adhesiveness, and weather-resistant adhesiveness of the resulting cured objects become more significant. Calcium carbonate in various shapes can be used, for example, cubic, non-cubic, or amorphous.

Furthermore, surface-treated calcium carbonate treated with a surface treatment agent is more preferable. When surface-treated calcium carbonate is used, it is believed that the workability of the composition of the present invention is improved and the effects of improving adhesiveness and weather-resistant adhesiveness of the curable composition are more enhanced, compared with the use of calcium carbonate that is not surface-treated. Examples of the surface treatment agent include organic substances, such as fatty acids, fatty acid soaps, and fatty acid esters, various surfactants, and various coupling agents, such as silane coupling agents and titanate coupling agents. Specific examples thereof include, but are not limited to, fatty acids, such as caproic acid, caprylic acid, pelargonic acid, capric acid, undecanoic acid, lauric acid, myristic acid, palmitic acid, stearic acid, behenic acid, and oleic acid; sodium, potassium and other salts of such fatty acids; and alkyl esters of such fatty acids. Specific examples of the surfactants include sulfate-type anionic surfactants, such as polyoxyethylene alkyl ether sulfates and long-chain alcohol sulfates, and sodium, potassium and other salts thereof; and sulfonic acid-type anionic surfactants, such as alkylbenzenesulfonic acids, alkylnaphthalenesulfonic acids, paraffinsulfonic acids, α-olefinsulfonic acids, alkylsulfosuccinic acids, and the like, and sodium, potassium and other salts thereof. The surface treatment agent is used for the treatment preferably in an amount of 0.1% to 20% by weight, and more preferably in an amount of 1% to 5% by weight, relative to calcium carbonate. If the amount for the treatment is less than 0.1% by weight, the effects of improving workability, adhesiveness and weather-resistant adhesiveness may be insufficient, and if the amount exceeds 20% by weight, the storage stability of the curable composition may be degraded.

Although not particularly limited, when calcium carbonate is used and when thixotropy of the compound and the effects of improving breaking strength, elongation at break, adhesiveness, weather-resistant adhesiveness, and the like of the resulting cured objects are particularly expected, preferably precipitated calcium carbonate is used.

On the other hand, ground calcium carbonate may be added to decrease the viscosity of the compound, increase the volume, and reduce the cost. As the ground calcium carbonate, followings may be used as required.

Ground calcium carbonate is produced by mechanical grind and processing of naturalproducts(i.e., chalk (whiting), marble, limestone, or the like). While grind is performed by a dry process or a wet process, products obtained by wet grinding often degrade the storage stability of the curable composition of the present invention, thus being not preferred. Ground calcium carbonate products with various average particle sizes are obtained by classification. Although not particularly limited, when the effects of improving the breaking strength, elongation at break, adhesiveness, and weather-resistant adhesiveness of the resulting cured objects are expected, the specific surface area is preferably 1.5 m²/g to 50 m²/g, more preferably 2 m²/g to 50 m²/g, further more preferably 2.4 m²/g to 50 m²/g, and particularly preferably 3 m²/g to 50 m²/g. If the specific surface area is less than 1.5 m²/g, the improving effects may not be sufficient. Of course, when ground calcium carbonate is used simply to decrease the viscosity or increase the volume, the ranges of the specific surface area are not limited to those described above.

The specific surface area is defined as a value measured by the air permeation method according to JIS K 5101 (method in which the specific surface area is calculated based on the air permeability through a powder-packed layer). As the measurement apparatus, a specific surface area measurement apparatus model SS-100 manufactured by Shimadzu Corporation is preferably used.

These fillers may be used alone or in combination depending on the purpose or need. Although not particularly limited, for example, if ground calcium carbonate and precipitated calcium carbonate with a specific surface area of 1.5 m²/g or more are combined as required, an increase in the viscosity of the compound is moderately reduced, and the effects of improving breaking strength, elongation at break, adhesiveness, and weather-resistant adhesiveness of the resulting cured objects are greatly expected.

### <Amount of addition>

The amount of the filler added is preferably 5 to 1,000 parts by weight, more preferably 20 to 500 parts by weight, and particularly preferably 40 to 300 parts by weight, based on 100 parts by weight of the crosslinkable silyl group-containing vinyl polymer. If the amount of the filler added is less than 5 parts by weight, the effects of improving breaking strength, elongation at break, adhesiveness, and weather-resistant adhesiveness of the resulting cured objects may often be insufficient. If the amount exceeds 1,000 parts by weight, the workability of the curable composition may often be degraded. The fillers may be used alone or in combination.

### <Fine hollow particles>

Furthermore, for the purpose of weight saving and cost reduction without substantially degrading the physical properties, fine hollow particles may be used together with the reinforcing fillers described above.

Such fine hollow particles (hereinafter referred to as "balloons") are not particularly limited. Examples thereof include inorganic or organic hollow particles with a diameter of 1 mm or less, preferably 500 µm or less, more preferably 200 µm or less, as described in "Kinosei filler no saishin gijutsu (Latest functional filler technology)" (CMC). In particular, fine hollow particles with a true specific gravity of 1.0 g/cm³ or less are preferably used, and more preferably, 0.5 g/cm³ or less.

Examples of the inorganic balloons include silicic acid-based balloons and non-silicic acid-based balloons. Examples of the silicic acid-based balloons include Shirasu balloons, perlite, glass (silica) balloons, and fly ash balloons, and examples of the non-silicic acid-based balloons include alumina balloons, zirconia balloons, and carbon balloons. Specific examples of the inorganic balloons, which are commercially available, include Shirasu balloons, such as Winlite manufactured by Ijichi Chemical and Sankilite manufactured by Sanki Kogyo; glass (silica) balloons, such as Fuji Balloon of Fuji Silysia Chemical Ltd., Caloon manufactured by Nippon Sheet Glass, Celstar Z-28 manufactured by Sumitomo 3M, MICRO BALLOON manufactured by EMERSON & CUMING, CELAMIC GLASSMODULES manufactured by PITTSBURGE CORNING, GLASS BUBBLES manufactured by 3M, Q-CEL manufactured by Asahi Glass and E-SPHERES manufactured by Taiheiyo Cement; fly ash balloons, such as, CEROSPHERES manufactured by PFAMARKETING and FILLITE manufactured by FILLITE U.S.A; alumina balloons, such as BW manufactured by Showa Denko; zirconia balloons, such as HOLLOW ZIRCONIUM SPHEES manufactured by ZIRCOA; and carbon balloons, such as Kureka sphere manufactured by Kureha Chemical and Carbosphere manufactured by GENERAL TECHNOLOGIES.

Examples of the organic balloons include thermosetting resin balloons and thermoplastic resin balloons. Examples of thermosetting balloons include phenolic balloons, epoxy balloons, and urea balloons, and examples of thermoplastic balloons include saran balloons, polystyrene balloons, polymethacrylate balloons, poly(vinyl alcohol) balloons, and styrene-acrylic balloons. Balloons composed of crosslinked thermoplastic resins can also be used. Herein, the balloons may be expanded balloons, or mixtures containing blowing agents may be expanded to form balloons after compounding.

Specific examples of organic balloons, which are commercially available, include phenolic balloons, such as UCAR and PHENOLIC MICROBALLOONS manufactured by Union Carbide; epoxy balloons, such as ECCOSPHERES manufactured by EMERSON & CUMING; urea balloons, such as ECCOSPHERES VF-O manufactured by EMERSON & CUMING; saran balloons, such as SARAN MICROSPHERES manufactured by DOW CHEMICAL, Expancel manufactured by Nippon Filament, and Matsumoto Microsphere manufactured by Matsumoto Yushi-Seiyaku; polystyrene balloons, such as DYLITE EXPANDABLE POLYSTYRENE manufactured by ARCO POLYMERS and EXPANDABLE POLYSTYRENE BEADS manufactured by BASF WYANDOTE; and crosslinkable styrene-acrylic acid balloons, such as SX863(P) manufactured by Japan synthetic Rubber.

These balloons may be used alone, or two or more of these may be mixed for use. Further usable are the balloons whose surfaces are treated with a fatty acid, a fatty acid ester, rosin, rosin acid lignin, a silane coupling agent, a titanium coupling agent, an aluminum coupling agent, polypropylene glycol, or the like in order to improve dispersibility and the workability of the compound. These balloons are used for the purposes of improving workability, such as knife-releasable properties, before curing; saving weight without degrading flexibility and elongation/strength after curing to reduce cost; and providing design functions, such as surface delustering, sputtering and the like.

Although not particularly limited, the balloon content is preferably 0.1 to 50 parts by weight, and more preferably 0.1 to 30 parts by weight, based on 100 parts by weight of the crosslinkable silyl group-containing vinyl polymer. If the content is less than 0.1 parts by weight, the effect of saving weight may be small, while if the content is more than 50 parts by weight, tensile strength, among mechanical characteristics, of the resulting cured object may often be decreased. When the specific gravity of the balloon is 0.1 or more, the balloon content is preferably 3 to 50 parts by weight, and more preferably 5 to 30 parts by weight.

### <Physical property-adjusting agent>

A physical property-adjusting agent for adjusting the tensile properties of the resulting cured object may be added to the curable composition of the present invention as required.

Examples of the physical property-adjusting agent include, but are not limited to, alkylalkoxysilanes, such as methyltrimethoxysilane, dimethyldimethoxysilane, trimethylmethoxysilane, and n-propyltrimethoxysilane; functional group-containing alkoxysilanes, such as alkylisopropenoxysilanes, e.g., dimethyldiisopropenoxysilane, methyltriisopropenoxysilane, and γ-glycidoxypropylmethyldiisopropenoxysilane, γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, and γ-mercaptopropylmethyldimethoxysilane; silicone varnishes; and polysiloxanes. By using the physical property-adjusting agent, when the composition of the present invention is cured, hardness can be increased or decreased and elongation at break can be increased. The above-described physical property-adjusting agents may be used alone or in combination.

### <Silanol-containing compound>

In the composition of the present invention, according to need, a silanol-containing compound may be incorporated in order to change physical properties of the resulting cured object or the like. The silanol-containing compound refers to a compound having one silanol group per molecule and/or a compound capable of forming a compound having one silanol group per molecule by reaction with moisture. Either one of the compounds may be used or both compounds may be used simultaneously.

Examples of the compound having one silanol group per molecule, which is one of the silanol-containing compounds, include, but are not limited to, compounds represented by the formula (R")₃SiOH (wherein R"s may be the same or different and each represent a substituted or unsubstituted alkyl group or aryl group), such as (CH₃)₃SiOH, (CH₃CH₂)₃SiOH, (CH₃CH₂CH₂)₃SiOH, (n-Bu)₃SiOH, (sec-Bu)₃SiOH, (tert-Bu)₃SiOH, (tert-Bu)Si(CH₃)₂OH, (C₅H₁₁)₃SiOH, (C₆H₁₃)₃SiOH, (C₆H₅)₃SiOH, (C₆H₅)₂Si(CH₃)OH, (C₆H₅) Si (CH₃)₂OH, (C₆H₅)₂Si (C₂H₅) OH, C₆H₅Si (C₂H₅)₂OH, C₆H₅CH₂Si (C₂H₅)₂O_{H}, and C₁₀H₇Si (CH₃)₂OH (wherein C₆H₅ represents a phenyl group, and C₁₀H₇ represents a naphthyl group);
silanol group-containing cyclic polysiloxane compounds, such as the followings: 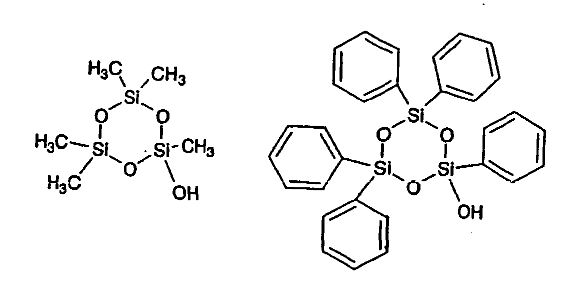 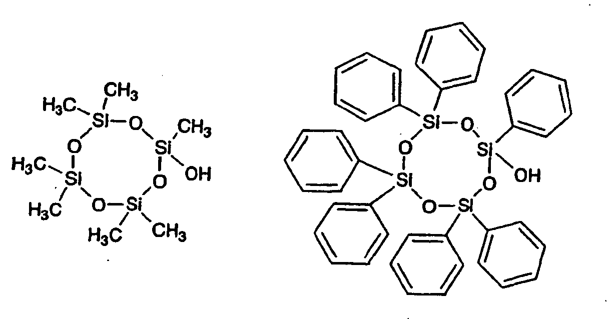 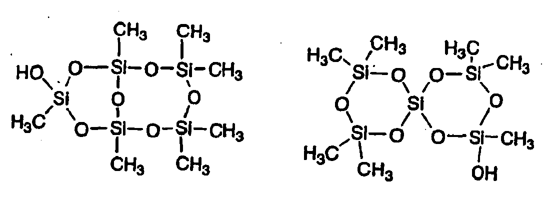 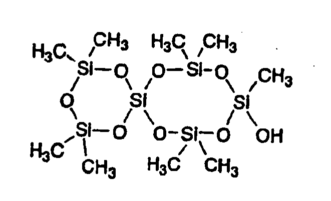 silanol group-containing linear polysiloxane compounds, such as the followings: 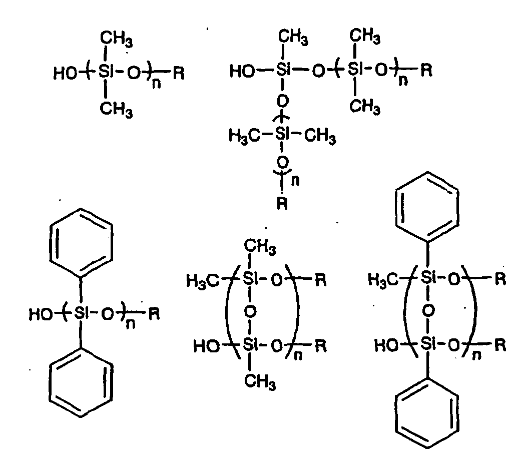 (wherein R represents a hydrocarbon group having 1 to 10 carbon atoms);
a compound in which a silanol group is bonded to the end of a polymer main chain composed of silicon and carbon, such as the followings: 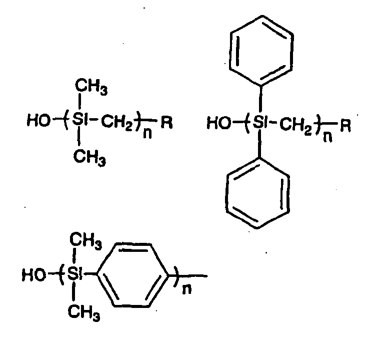 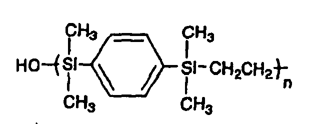 (wherein R represents a hydrocarbon group having 1 to 10 carbon atoms, and n is an integer of 1 to 10);
a compound in which a silanol group is bonded to the end of a main chain of a polysilane, such as the followings: 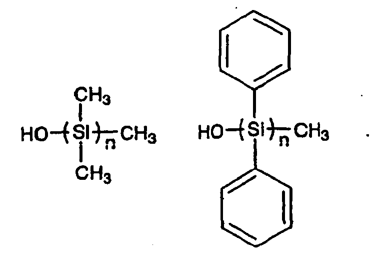 (wherein n is an integer of 1 to 20); and a compound in which a silanol group is bonded to the end of a polymer main chain composed of silicon, carbon, and oxygen, such as the followings: 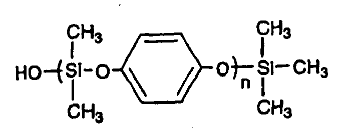 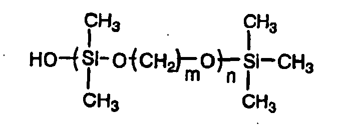 (wherein n is an integer of 1 to 20, and m is an integer of 1 to 20). Among these, preferred are compounds represented by general formula (45):

(R⁵⁸)₃SiOH (45)

(wherein R⁵⁸ represents a monovalent hydrocarbon group having 1 to 20 carbon atoms, and R⁵⁸s may be the same or different).

R²⁷ is preferably a methyl group, an ethyl group, a vinyl group, a tert-butyl group, or a phenyl group, and more preferably a methyl group.

Above all, small molecular weight (CH₃)₃SiOH or the like is preferable from the standpoints of ease of availability and the effect.

The compound having one silanol group per molecule decreases the number of crosslinking points by reaction with the crosslinkable silyl group of the crosslinkable silyl group-containing vinyl polymer or a siloxane bond generated by crosslinking, and thus imparting flexibility to the cured object and providing a composition having low surface tackiness and excellent anti-dust adherability.

Furthermore, the compound capable of forming a compound having one silanol group per molecule by reaction with moisture, which is one of the components in the present invention, is not particularly limited. Preferably, the compound having one silanol group per molecule generated by reaction with moisture (hydrolysis product) is the compound represented by general formula (45) described above. Besides compounds represented by general formula (46), which will be described below, preferred examples thereof include the following compounds:
N,O-bis(trimethylsilyl)acetamide,
N-(trimethylsilyl)acetamide,
bis(trimethylsilyl)trifluoroacetamide,
N-methyl-N-trimethylsilyltrifluoroacetamide,
bis trimethylsilyl urea,
N-(t-butyldimethylsilyl)N-methyltrifluoroacetamide,
(N,N-dimethylamino)trimethylsilane,
(N,N-diethylamino)trimethylsilane,
hexamethyldisilazane, 1,1,3,3-tetramethyldisilazane, N-(trimethylsilyl)imidazole, trimethylsilyl trifluoromethanesulfonate, trimethylsilyl phenoxide, trimethylsilylated n-octanol, trimethylsilylated 2-ethylhexanol, tris-trimethylsilylated glycerol, tris-trimethylsilylated trimethylolpropane, tris-trimethylsilylated pentaerythritol, tetra-trimethylsilylated pentaerythritol, (CH₃)₃SiNHSi(CH₃)₃, (CH₃)₃SiNSi(CH₃)₂, 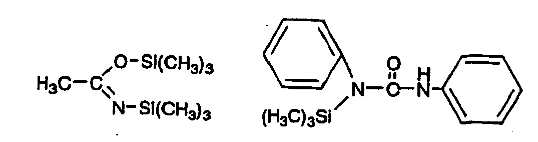 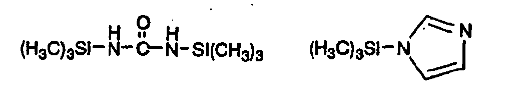 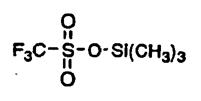 In view of the amount of the silanol group contained in the hydrolysis product, (CH₃)₃SiNHSi(CH₃)₃ is particularly preferable.

Furthermore, the compound capable of forming a compound having one silanol group per molecule by reaction with moisture, which is one of the components in the present invention, is not particularly limited. Besides the compounds described above, preferred are compounds represented general formula (46):

((R⁵⁸)₃SiO)ₙR⁵⁹ (46)

(wherein R⁵⁸ is the same as that described above; n is a positive number; and R⁵⁹ represents a group obtained by eliminating active hydrogen partially or entirely from an active hydrogen-containing compound).

R⁵⁸ is preferably a methyl group, an ethyl group, a vinyl group, a tert-butyl group, or a phenyl group, and more preferably a methyl group.

The (R⁵⁸)₃Si group is particularly preferably a trimethylsilyl group in which all of the three R⁵⁸s are methyl groups. Furthermore, n is preferably 1 to 5.

Examples of the active hydrogen-containing compound from which R⁵⁹ is derived include, but are not limited to, alcohols, such as methanol, ethanol, n-butanol, i-butanol, tert-butanol, n-octanol, 2-ethylhexanol, benzyl alcohol, ethylene glycol, diethylene glycol, polyethylene glycol, propylene glycol, dipropylene glycol, polypropylene glycol, propanediol, tetramethylene glycol, polytetramethylene glycol, glycerol, trimethylolpropane, and pentaerythritol; phenols, such as phenol, cresol, bisphenol A, and hydroquinone; carboxylic acids, such as formic acid, acetic acid, propionic acid, lauric acid, palmitic acid, stearic acid, behenic acid, acrylic acid, methacrylic acid, oleic acid, linoleic acid, linolenic acid, sorbic acid, oxalic acid, malonic acid, succinic acid, adipic acid, maleic acid, benzoic acid, phthalic acid, terephthalic acid, and trimellitic acid; ammonia; amines, such as methylamine, dimethylamine, ethylamine, diethylamine, n-butylamine, and imidazole; acid amides, such as acetamide and benzamide; ureas, such as urea and N,N'-diphenylurea; and ketones, such as acetone, acetylacetone, and 2,4-heptadione.

The compound capable of forming a compound having one silanol group per molecule by reaction with moisture represented by general formula (46) described above can be obtained, for example, by allowing the active hydrogen-containing compound or the like to react with a compound having a group reactable with active hydrogen of a halogen group or the like together with a (R⁵⁸)₃Si group (wherein R⁵⁸ is the same as that described above), which is also referred to as a silylation agent, such as trimethylsilylchloride or dimethyl(tert-butyl) chloride, although not limited thereto.

Specific examples of the compound represented by general formula (46) include, but are not limited to, allyloxytrimethylsilane, N,O-bis(trimethylsilyl)acetamide, N-(trimethylsilyl)acetamide, bis(trimethylsilyl)trifluoroacetamide, N-methyl-N-trimethylsilyltrifluoroacetamide, bis trimethylsilyl urea, N-(t-butyldimethylsilyl)N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyltrifluoromethanesulfonate, trimethylsilyl phenoxide, trimethylsilylated n-octanol, trimethylsilylated 2-ethylhexanol, tris-trimethylsilylated glycerol, tris-trimethylsilylated trimethylolpropane, tris-trimethylsilylated pentaerythritol, and tetra-trimethylsilylated pentaerythritol. These may be used alone or in combination.

Other preferred examples include compounds represented by the general formula

(((R⁶⁰)₃SiO)(R⁶¹O)ₛ)ₜZ

(wherein R⁶⁰s may be the same or different and each represent a substituted or unsubstituted monovalent hydrocarbon group or a hydrogen atom; R⁶¹ represents a divalent hydrocarbon group having 1 to 8 carbon atoms; s and t each are a positive integer, s being 1 to 6, and s x t being equal to or greater than 5; and Z represents a monovalent to hexavalent organic group),
CH₃O(CH₂CH(CH₃)O)ₛSi(CH₃)₃,
CH₂=CHCH₂(CH₂CH(CH₃)O)₅Si(CH₃)₃,
(CH₃)₃SiO(CH₂CH(CH₃)O)ₛSi(CH₃)₃, and
(CH₃)₃SiO(CH₂CH(CH₃)O)₇Si(CH₃)₃. These may be used alone or in combination.

With respect to the compound capable of forming a compound having one silanol group per molecule by reaction with moisture, from the standpoint that storage stability, weatherability, etc. are not adversely affected, the active hydrogen compound generated after hydrolysis is preferably a phenol, an acid amide, or an alcohol, and more preferably, a phenol or an alcohol in which active hydrogen compound has a hydroxyl group.

Among the compounds described above, preferred are N,O-bis(trimethylsilyl)acetamide, N-(trimethylsilyl)acetamide, trimethylsilyl phenoxide, trimethylsilylated n-octanol, trimethylsilylated 2-ethylhexanol, tris-trimethylsilylated glycerol, tris-trimethylsilylated trimethylolpropane, tris-trimethylsilylated pentaerythritol, and tetra-trimethylsilylated pentaerythritol.

The compound capable of forming a compound having one silanol group per molecule by reaction with moisture forms a compound having one silanol group per molecule by reaction with moisture during storage, during curing, or after curing. As described above, the resulting compound having one silanol group per molecule is believed to decrease the number of crosslinking points by reaction with the crosslinkable silyl group of the vinyl polymer or a siloxane bond generated by crosslinking, thus imparting flexibility to the cured object.

The amount of the silanol-containing compound used can be adjusted appropriately depending on desired physical properties of the cured object. The silanol-containing compound can be used in an amount of 0.1 to 50 parts by weight, preferably 0.3 to 20 parts by weight, and more preferably 0.5 to 10 parts by weight, based on 100 parts by weight of the vinyl polymer. If the amount is less than 0.1 parts by weight, the effect of addition is not shown. If the amount exceeds 50 parts by weight, crosslinking becomes insufficient, and the strength of the cured object and the gel fraction decrease excessively.

The timing of addition of the silanol-containing compound to the vinyl polymer is not particularly limited. The silanol-containing compound may be added during the production of the vinyl polymer or during the preparation of the curable composition.

### <Thixotropy-imparting agent (anti-sagging agent)>

In the curable composition of the present invention, a thixotropy-imparting agent (anti-sagging agent) may be incorporated as required in order to prevent sagging and to improve workability.

The thixotropy-imparting agent (anti-sagging agent) is also referred to as a thixotropic property-imparting agent. To impart thixotropy means to provide a property in which fluidity is exhibited when strong force is applied, such as the cases of bead extrusion from a cartridge, application with a spatula or the like, and blasting with a spray or the like, and non-flowing is allowed until the composition is cured after application or working.

Furthermore, the thixotropy-imparting agent (anti-sagging agent) is not particularly limited. Examples thereof include organic compounds, such as amide wax, e.g., Disparlon (manufactured by Kusumoto Chemicals), hydrogenated castor oil, hydrogenated castor oil derivatives, fatty acid derivatives, metal soaps, such as calcium stearate, aluminum stearate, and barium stearate, and 1,3,5-tris(trialkoxysilylalkyl) isocyanurate; and inorganic compounds, such as calcium carbonate of which surface is treated with a fatty acid or a resin acid, fine silica powder, and carbon black.

The term "fine silica powder" means a natural or artificial inorganic filler mainly composed of silicon dioxide. Examples thereof include kaolin, clay, activated white clay, silica sand, silica rock, diatomaceous earth, anhydrous aluminum silicate, hydrated magnesium silicate, talc, perlite, white carbon, fine mica powder, bentonite, and organic bentonite.

In particular, ultrafine anhydrous silica powder formed by vapor phase reaction of a volatile compound containing silicon, and organic bentonite are preferable. The specific surface area thereof is preferably at least 50 m²/g, and more preferably 50 to 400 m²/g. Furthermore, both hydrophilic silica and hydrophobic silica can be used. Although surface treatment is optional, hydrophobic silica of which surface is subjected to hydrophobic treatment with silazane, chlorosilane, alkoxysilane, or polysiloxane having only a methyl group as an organic substituent bonded to the silicon atom is preferable.

Specific examples of the surface-treating agent include silazanes, such as hexamethyldisilazane; halogenated silanes, such as trimethylchlorosilane, dimethyldichlorosilane, and methyltrichlorosilane; alkoxysilanes (examples of the alkoxy group including a methoxy group, an ethoxy group, a propoxy group, and a butoxy group), such as trimethylalkoxysilane, dimethyldialkoxysilane, and methyltrialkoxysilane; and siloxanes, such as cyclic or linear polydimethylsiloxane. These may be used alone or in combination. Among them, hydrophobic fine silica powder surface-treated with a siloxane (dimethyl silicone oil) is preferable in view of the thixotropic property-providing effect.

Furthermore, by using fine silica powder together with any of polyether compounds, such as diethylene glycol, triethylene glycol, and polyethylene glycol, reaction products of polyether compounds and functional silane, or nonionic surfactants having an ethylene oxide chain, thixotropy is enhanced. The nonionic surfactant may be used alone or two or more nonionic surfactants may be combined for use.

Specific examples of the fine silica powder include commercially available products, such as Aerosil R974, R972, R972V, R972CF, R805, R812, R812S, RY200, RX200, RY200S, #130, #200, #300, R202, etc. (trade names) manufactured by Japan Aerosil Co., Ltd., Nipsil SS series (trade name) manufactured by Nippon Silica Industrial Co., Ltd., Rheorosil MT-10, MT-30, QS-102, and QS-103 (trade names) manufactured by Tokuyama Corp., Cabosil TS-720, MS-5, and MS-7 (trade names) manufactured by Cabot Corp., and S-Ben and Organite manufactured by Hojun Co., Ltd.

Furthermore, organic bentonite is a powdery substance obtained by mainly pulverizing montmorillonite ore and surface-treated with any of various types organic substances. As the organic compound, an aliphatic primary amine, an aliphatic quaternary amine (each having preferably 20 or less carbon atoms), or the like is used. Specific examples of the organic bentonite include Orben D and New D Orben (trade name) manufactured by Shiraishi Kogyo Kaisha, Ltd., Hardsil (trade names) manufactured by Tsuchiya Kaolin Ind., Co., Ltd., Clay #30 manufactured by Bergess Pigment, Southern Clay's #33, and "Bentone 34" (dimethyloctadecyl ammonium bentonite) manufactured by National Lead Company, U.S.

A thixotropic index means a ratio between the apparent relative viscosity at a low rotation rate (e.g., 0.5 to 12 rpm) and the apparent relative viscosity at a high rotation rate (e.g., 2.5 to 60 rpm) in viscosity measurement with a rotation viscometer. Note that the ratio between the high rotation rate and the low rotation rate is at least 5, and preferably in a range of 5 to 10.

These thixotropy-imparting agents (anti-sagging agents) may be used alone or in combination.

### <Photo-curable material>

In the curable composition of the present invention, a photo-curable material may be incorporated as necessary. In the photo-curable material, the molecular structure is chemically changed by the action of light in a short period of time to cause changes in physical properties, such as curing. By using such a photo-curable material, surface tackiness (also referred to as residual tackiness) of the cured object obtained by curing the curable composition can be decreased. The photo-curable material is a substance which can be cured by application of light. A typical photo-curable material can be cured by allowing it to stand, for example, in a sunny indoor spot (near the window) for one day at room temperature. As the compound of this type, organic monomers, oligomers, resins, or compositions containing these compounds, and many others are known. Examples thereof include, but are not limited to, unsaturated acrylic compounds, polyvinyl cinnamates, azidized resins, epoxy compounds, and vinyl ether compounds.

Examples of the unsaturated acrylic compound include (meth)acrylates of low-molecular-weight alcohols (oligoester acrylates), such as ethylene glycol, glycerol, trimethylolpropane, pentaerythritol, and neopentyl alcohol; (meth)acrylates of acids, such as bisphenol A and isocyanuric acid, or alcohols obtained by denaturing the low-molecular-weight alcohols described above or the like with ethylene oxide or propylene oxide; (meth)acrylates, such as hydroxyl group-terminated polyether polyols having a polyether main chain, polymer polyols obtained by radically polymerizing vinyl monomers in polyols having a polyether main chain, hydroxyl group-terminated polyester polyols having a polyester main chain, and polyols having a vinyl or (meth)acrylic polymer main chain containing a hydroxyl group; (meth)acrylates having a vinyl or (meth)acrylic polymer main chain and obtained by copolymerizing a polyfunctional acrylate in the main chain; epoxy acrylate oligomers obtained by reaction of an epoxy resin, such as bisphenol A or novolac epoxy resin with (meth)acrylic acid; and urethane acrylate oligomers each having a urethane bond and a (meth)acrylic group in its molecular chain, and obtained by reaction with a polyol, polyisocyanate, a hydroxyl group-containing (meth)acrylate, or the like.

The polyvinyl cinnamate is a photosensitive resin having a cinnamoyl group as a photosensitive group, and examples thereof include polyvinyl cinnamate obtained by esterification of polyvinyl alcohol with cinnamic acid, and many other polyvinyl cinnamate derivatives.

Azidized resins are known as photosensitive resins having azido groups as photosensitive groups, and typical examples include sensitizing rubber solutions in which azidized compounds are added as sensitizers. In addition, "Kankosei jushi (Photosensitive resins)" (published on March 17, 1972, by Insatsu Gakkai Shuppanbu, from page 93, from page 106, and from page 117), describes detailed examples. These may be used alone or in combination, and as necessary, with an addition of an intensifier.

Examples of the epoxy compound and the vinyl ether compound include epoxy group-terminated or vinyl ether group-terminated polyisobutylenes.

Among the photo-curable materials described above, unsaturated acrylic compounds are preferable because of ease of handling.

The photo-curable material is used in an amount of preferably 0.01 to 20 parts by weight based on 100 parts by weight of the crosslinkable silyl group-containing vinyl polymer. If the amount is less than 0.01 parts by weight, the effect is low. If the amount exceeds 20 parts by weight, physical properties may be adversely affected. In some cases, the effect can be enhanced by the addition of an intensifier, such as a ketone or a nitro compound, or an accelerator, such as an amine.

### <Air oxidative curing material>

In the curable composition of the present invention, an air oxidative curing material may be incorporated as necessary. The air oxidative curing material is a compound having an unsaturated group which can be crosslinked and cured by oxygen in air. By incorporating the air oxidative curing material, it is possible to decrease the surface tackiness (also referred to as residual tackiness) of the cured object obtained by curing the curable composition. The air oxidative curing material in the present invention is a substance curable when in contact with air, more specifically, curable by reaction with oxygen in air. A typical air oxidative curing material can be cured, for example, by allowing it to stand in air indoors for one day.

Examples of the air oxidative curing material include drying oil, such as tung oil and linseed oil; various types of alkyd resin obtained by modification of such drying oil; acrylic polymers, epoxy resins, silicone resins, and urethane resins modified with drying oil; 1,2-polybutadiene, 1,4-polybutadiene, and polymers and copolymers of C5 to C8 dienes; and modified products of the polymers and copolymers (maleated products, boiled oil-modified products, etc). In particular, tung oil, liquid products among diene polymers (liquid diene polymers), and modified products thereof are preferable.

Specific examples of the liquid diene polymer include liquid polymers obtained by polymerizing or copolymerizing diene compounds, such as butadiene, chloroprene, isoprene, and 1,3-pentadiene; polymers, such as NBR and SBR, obtained by copolymerizing such diene compounds with monomers copolymerizable with the diene compounds, such as acrylonitrile and styrene, so that the diene compounds predominate; and modified products of these compounds (maleated products, boiled oil-modified products, etc). These may be used alone or in combination. Among these liquid diene compounds, liquid polybutadiene is preferable.

The air oxidative curing material may be used alone or in combination. In some cases, the effect may be enhanced by using the air oxidative curing material together with a catalyst which accelerates oxidative curing reaction or a metal dryer. Examples of such a catalyst or metal dryer include metal salts, such as cobalt naphthenate, lead naphthenate, zirconium naphthenate, cobalt octylate, and zirconium octylate; and amine compounds.

The air oxidative curing material may be used together with the photo-curable material and/or the silanol-containing compound described above. Use of these two or three components together further enhances the effect, and in particular, often exhibits a remarkable effect of preventing contamination even in the case of long-time exposure and in a highly contaminating region with large amounts of dust and fine particles of earth and sand, thus being particularly preferable.

The air oxidative curing material is used in an amount of preferably 0.01 to 20 parts by weight based on 100 parts by weight of the crosslinkable silyl group-containing vinyl polymer. If the amount of use is less than 0.01 parts by weight, the effect is low. If the amount of use exceeds 20 parts by weight, physical properties may be adversely affected.

### <Antioxidant>

In the composition of the present invention, an antioxidant may be incorporated as necessary. Various types of antioxidant have been known, for example, as described in "Antioxidant Handbook" published by Taiseisha, "Kobunshizairyo no rekka to anteika (Degradation and stabilization of polymer materials)" published by CMC Chemical (235-242), etc., but not limited thereto. Examples include thioether-based antioxidants, such as MARK PEP-36 and MARK AO-23 (both manufactured by Asahi Denka Kogyo K.K.), and phosphorus-based antioxidants, such as Irgafos 38, Irgafos 168, and Irgafos P-EPQ (all of which are manufactured by Ciba Specialty Chemicals). In particular, hindered phenol compounds as those described below are preferable.

Examples of the hindered phenol compounds include 2,6-di-tert-butyl-4-methylphenol, 2,6-di-tert-butyl-4-ethylphenol, mono(or di or tri)(α-methylbenzyl)phenol, 2,2'-methylenebis(4-ethyl-6-tert-butylphenol), 2,2'-methhylenebis (4-methyl-6-tert-butylphenol), 4,4'-butylidenebis(3-methyl-6-tert-butylphenol), 4,4'-thiobis(3-methyl-6-tert-butylphenol), 2,5-di-tert-butylhydroquinone, 2,5-di-tert-amylhydroquinone, triethylene glycol-bis-[3-(3-tert-butyl-5-methyl-4-hydroxyphenyl)propionate], 1,6-hexanediol-bis[3-(3,5-di-tert-butyl-4-hydroxyphenyl)propionate], 2,4-bis-(n-octylthio)-6-(4-hydroxy-3,5-di-tert-butylanilino)-1,3,5-triazine, pentaerythritol-tetrakis[3-(3,5-di-tert-butyl-4-hydroxyphenyl)propionate], 2,2-thio-diethylenebis[3-(3,5-di-tert-butyl-4-hydroxyphenyl)propionate], octadecyl-3-(3,5-di-tert-butyl-4-hydroxyphenyl) propionate, N,N'-hexamethhylenebis(3,5-di-tert-butyl-4-hydroxy-hydrocinnamamide), 3,5-di-tert-butyl-4-hydroxy-benzylphosphonate-diethyl ester, 1,3,5-trimethyl-2,4,6-tris (3,5-di-tert-butyl-4-hydroxybenzyl)benzene, calcium bis[ethyl(3,5-di-tert-butyl-4-hydroxybenzyl)phosphinate], tris-(3,5-di-tert-butyl-4-hydroxybenzyl)isocyanurate, 2,4-2,4-bis[(octylthio)methyl]o-cresol, N,N'-bis[3-(3,5-di-tert-butyl-4-hydroxyphenyl)propionyl]hydrazine, tris(2,4-di-tert-butylphenyl)phosphite, 2-(5-methyl-2-hydroxyphenyl)benzotriazole, 2-[2-hydroxy-3,5-bis(α,α-dimethylbenzyl)phenyl]-2H-benzotriazole, 2-(3,5-di-tert-butyl-2-hydroxyphenyl)benzotriazole, 2-(3-tert-butyl-5-methyl-2-hydroxyphenyl)-5-chlorobenzotriazole, 2-(3,5-di-tert-butyl-2-hydroxyphenyl)-5-chlorobenzotriazole, 2-(3,5-di-tert-amyl-2-hydroxyphenyl)benzotriazole, 2-(2'-hydroxy-5'-tert-octylphenyl)-benzotriazole, methyl-3-[3-tert-butyl-5-(2H-benzotriazol-2-yl)-4-hydroxyphenyl]propionate-polyethylene glycol (molecular weight: about 300) condensates, hydroxyphenylbenzotriazole derivatives, 2-(3,5-di-tert-butyl-4-hydroxybenzyl)-2-n-butylmalonic acid bis(1,2,2,6,6-pentamethyl-4-piperidyl), and 2,4-di-tert-butylphenyl-3,5-di-tert-butyl-4-hydroxybenzoate.

Examples of trade names include, but are not limited to, NOCRAC 200, NOCRAC M-17, NOCRAC SP, NOCRAC SP-N, NOCRAC NS-5, NOCRAC NS-6, NOCRAC NS-30, NOCRAC 300, NOCRAC NS-7, NOCRAC DAH (all of which are manufactured by Ouchishinko Chemical Industrial Co., Ltd.), MARK AO-30, MARK AO-40, MARK AO-50, MARK AO-60, MARK AO-616, MARK AO-635, MARK AO-658, MARK AO-80, MARK AO-15, MARK AO-18, MARK 328, and MARK AO-37 (all of which are manufactured by Asahi Denka Kogyo K.K.), IRGANOX-245, IRGANOX-259, IRGANOX-565, IRGANOX-1010, IRGANOX-1024, IRGANOX-1035, IRGANOX-1076, IRGANOX-1081, IRGANOX-1098, IRGANOX-1222, IRGANOX-1330, and IRGANOX-1425WL (all of which are manufactured by Ciba Specialty Chemicals), and Sumilizer GM and Sumilizer GA-80 (both manufactured by Sumitomo Chemical Co., Ltd.).

The antioxidant may be used together with the light stabilizer which will be described below. By combining the antioxidant and the light stabilizer for use, the effect is further enhanced, and in particular, heat resistance is often improved, thus being particularly preferable. It may also be possible to use TINUVIN C353, TINUVIN B75 (both manufactured by Ciba Specialty Chemicals), or the like in which an antioxidant and a light stabilizer are preliminarily mixed.

The antioxidant is used preferably in an amount of 0.1 to 10 parts by weight based on 100 parts by weight of the crosslinkable silyl group-containing polymer. If the amount is less than 0.1 parts by weight, the effect of improving weatherability is low. If the amount exceeds 5 parts by weight, there is substantially no difference in the effect, which is uneconomical.

### <Light stabilizer>

In the curable composition of the present invention, a light stabilizer may be incorporated as necessary. Various types of light stabilizer have been known, for example, as described in "Antioxidant Handbook" published by Taiseisha, "Kobunshizairyo no rekka to anteika (Degradation and stabilization of polymer materials)" published by CMC Chemical (235-242), etc. Although not limited thereto, among the light stabilizers, ultraviolet absorbers and hindered amine light stabilizers are preferable. Examples thereof include benzotriazole-based compounds, such as TINUVIN P, TINUVIN 234, TINUVIN 320, TINUVIN 326, TINUVIN 327, TINUVIN 329, and TINUVIN 213 (all of which are manufactured by Ciba Specialty Chemicals), triazine-based compounds, such as TINUVIN 1577, benzophenone-based compounds, such as CHIMASSORB 81, and benzoate-based compounds, such as TINUVIN 120 (manufactured by Ciba Specialty Chemicals).

Hindered amine compounds are also preferable, and examples thereof include the followings:
Dimethyl succinate-1-(2-hydroxyethyl)-4-hydroxy-2,2,6,6-tetramethylpiperidine polycondensate, poly[{6-(1,1,3,3-tetramethylbutyl)amino-1,3,5-triazine-2,4-diyl}{(2,2,6,6-tetramethyl-4-piperidyl)imino}], N,N'-bis(3-aminopropyl)ethylenediamine-2,4-bis[N-butyl-N-(1,2,2,6,6-pentamethyl-4-piperidyl)amino]-6-chloro-1,3,5-triazine condensate, bis(2,2,6,6-tetramethyl-4-piperidyl) sebacate, and bis(2,2,6,6-tetramethyl-4-piperidinyl) succinate.

Examples of trade names include, but are not limited to, TINUVIN 622LD, TINUVIN 144, CHIMASSORB 944LD, CHIMASSORB 119FL, and Irgafos 168 (all of which are manufactured by Ciba Specialty Chemicals), MARK LA-52, MARK LA-57, MARK LA-62, MARK LA-67, MARK LA-63, MARK LA-68, MARK LA-82, and MARK LA-87, (all of which are manufactured by Asahi Denka Kogyo K.K.), and Sanol LS-770, Sanol LS-765, Sanol LS-292, Sanol LS-2626, Sanol LS-1114, Sanol LS-744, and Sanol LS-440 (all of which are manufactured by Sankyo Co., Ltd.).

The light stabilizer may be used together with the antioxidant described above. By combining the light stabilizer and the antioxidant for use, the effect is further enhanced, and in particular, weatherability is often improved, thus being particularly preferable. The combination is not particularly limited. Preferred are a combination of the hindered phenol antioxidant and a benzotriazole-based ultraviolet absorber, for example; and a combination of the hindered phenol antioxidant and the hindered amine light stabilizer. Alternatively, a combination of the hindered phenol antioxidant, a benzotriazole-based ultraviolet absorber, for example, and the hindered amine light stabilizer is preferred. It may also be possible to use TINUVIN C353, TINUVIN B75 (both manufactured by Ciba Specialty Chemicals), or the like in which a light stabilizer and an antioxidant are preliminarily mixed.

The hindered amine light stabilizer may be used together with the photo-curable material. By combining the hindered amine light stabilizer and the photo-curable material for use, the effect is further enhanced, and in particular, weatherability is often improved, thus being particularly preferable. Although the combination is not particularly limited, in this case, a hindered amine light stabilizer containing a tertiary amine is preferable from the standpoints that an increase in viscosity during storage is low and storage stability is satisfactory.

The light stabilizer is used preferably in an amount of 0.1 to 10 parts by weight based on 100 parts by weight of the crosslinkable silyl group-containing polymer. If the amount is less than 0.1 parts by weight, the effect of improving weatherability is low. If the amount exceeds 5 parts by weight, there will be substantially no difference in the effect, which is uneconomical.

### <Epoxy resin>

In the composition of the present invention, an epoxy resin and a curing agent for epoxy resins may be incorporated. If a mixture of the vinyl polymer of the present invention and an epoxy resin is used, it is possible to produce a cured object having high strength and high adhesion. As the epoxy resin, any of commonly known epoxy resins can be widely used. Examples thereof include bisphenol A epoxy resins, bisphenol F epoxy resins, bisphenol AD epoxy resins, bisphenol S epoxy resins, resins obtained by hydrogenating these epoxy resins, glycidyl ester-type epoxy resins, glycidylamine-type epoxy resins, alicyclic epoxy resins, novolak epoxy resins, urethane-modified epoxy resins having urethane bonds, fluorinated epoxy resins, rubber-modified epoxy resins containing polybutadiene or NBR, and flame-retardant epoxy resins, such as glycidyl ethers of tetrabromobisphenol A. These epoxy resins may be used alone or in combination. Among these epoxy resins, from the standpoint of balance between workability, curability, adhesion strength, versatility with adherends, water resistance, durability, etc., bisphenol A epoxy resins are preferable.

The epoxy resin can be used in any percentage. In the case in which the resulting cured object is used with elasticity being maintained, such as in application to an elastic adhesive, the epoxy resin is used usually in an amount of about 10 to 80 parts by weight, and preferably in an amount of 20 to 70 parts by weight, based on 100 parts by weight of the crosslinkable silyl group-containing polymer. If the amount is less than 10 parts by weight, adhesion strength and water-resistance will become insufficient; and if the amount exceeds 80 parts by weight, a decrease in peel strength and the like will occur, all of which are undesirable.

The composition of the present invention can be incorporated with a curing agent for epoxy resins. As the epoxy resin curing agent, any of commonly known epoxy resin curing agents can be widely used. Examples thereof include aliphatic amines, such as ethylenediamine, diethylenetriamine, triethylenetetramine, tetraethylenepentamine, diethylaminopropylamine, hexamethylenediamine, methylpentamethylenediamine, trimethylhexamethylenediamine, guanidine, and oleylamine; alicyclic amines, such as menthanediamine, isophoronediamine, norbornanediamine, piperidine, N,N'-dimethylpiperazine, N-aminoethylpiperazine, 1,2-diaminocyclohexane, bis (4-amino-3-methylcyclohexyl)methane, bis(4-aminocyclohexyl)methane, polycyclohexylpolyamine, and 1,8-diazabicyclo[5,4,0]undecene-7 (DBU); aromatic amines, such as methaphenylenediamine, 4,4'-diaminodiphenylmethane, and 4,4'-diaminodiphenylsulfone; aliphatic aromatic amines, such as m-xylylenediamine, benzyldimethylamine, 2-(dimethylaminomethyl)phenol, and 2,4,6-tris(dimethylaminomethyl)phenol; ether bond-containing amines, such as 3,9-bis(3-aminopropyl)-2,4,8,10- tetraoxaspiro[5,5]undecane (ATU), morpholine, N-methyl morpholine, polyoxypropylenediamine, polyoxypropylenetrimaine, and polyoxyethylenediamine; hydroxyl group-containing amines, such as diethanolamine and triethanolamine; acid andydrides, such as tetrahydrophthalic anhydride, methyltetrahydrophthalic anhydride, methylnadic anhydride, hexahydrophthalic anhydride, and dodecylsuccinic anhydride; polyamideamines, such as polyamides obtained by reaction of dimer acids with polyamines, such as diethylenetriamine and triethylenetetramine, and polyamides obtained by using polycarboxylic acids other than dimer acids; imidazoles, such as 2-ethyl-4-methylimidazole; dicyandiamides; polyoxypropylene-based amines, such as polyoxypropylene-based diamines and polyoxypropylene-based triamines; phenols; modified amines, such as epoxy-modified amines obtained by reaction of the above-described amines with epoxy compounds, Mannich-modified amines obtained by reaction of the above-described amines with formalin and phenols, Michael addition-modified amines, and ketimines; and amine salts, such as 2-ethylhexanoate salt of 2,4,6-tris(dimethylaminomethyl)phenol. These curing agents may be used alone or in combination. Among these epoxy resin curing agents, 2,4,6-tris(dimethylaminomethyl)phenol and polyoxypropylene-based diamines are preferable in view of curability and balance between physical properties.

Although depending on the amount of the epoxy resin added, the epoxy resin curing agent is used usually in an amount of about 1 to 60 parts by weight, and preferably in an amount of about 2 to 50 parts by weight, based on 100 parts by weight of the crosslinkable silyl group-containing polymer. If the amount is less than 1 part by weight, curing of the epoxy resin becomes insufficient, and adhesion strength decreases. If the amount exceeds 60 parts by weight, bleeding to the interface and the like occur, resulting in a decrease in adhesion, which is undesirable.

### <Compatibilizer>

A compatibilizer can be added to the curable composition of the present invention. Examples of such an additive which may be used include copolymers of a plurality of vinyl monomers described in the specification of Japanese Unexamined Patent Application Publication No. 2001-329025.

### <Other additives>

The curable composition of the present invention may be incorporated with various types of additives as required in order to adjust physical properties of the curable composition or the resulting cured object. Examples of such additives include a flame retardant, a curability-adjusting agent, a metal deactivator, an antiozonant, a phosphorus-containing peroxide decomposer, a lubricant, a pigment, and a foaming agent. These additives may be used alone or in combination.

Specific examples of such additives are described, for example, in Japanese Examined Patent Application Publication Nos. 4-69659 and 7-108928, and Japanese Unexamined Patent Application Publication Nos. 63-254149 and 64-22904.

The curable composition of the present invention can be used substantially in the absence of a solvent. Although a solvent may be used from the standpoint of workability or the like, the solvent is desirably not used in consideration of environmental influence.

The curable composition of the present invention can be prepared as a one-part curable composition in which all the components are preliminarily mixed and hermetically sealed, and which is cured by moisture in air after being applied to a desired place. Alternatively, the curable composition of the present invention can be prepared as a two-part curable composition in which a mixture of components, such as a curing catalyst, a filler, a plasticizer, and water, is separately prepared as a curing agent, and the mixture and the polymer composition are mixed before use. In the case of two-part curable composition, a colorant can be added at the time of mixing the two components. Thus, it is easy to meet the multicolor requirements in the market. For example, when sealants matching the colors of siding boards are supplied, it is possible to have a great stock of colors with minimum inventory. Thus, the two-part curable composition is more suitable for low-rise buildings and the like. For the same reason in the two-part curable composition, a colorant may be added when the one-part curable composition is used. In particular, in the case of the one-part curable composition contained in cans, it is easy to meet the multicolor requirements. When the one-part curable composition is used for working, water may be added to the one-part composition taken out of the container, followed by mixing and the like to perform curing.

With respect to the colorant, for example, use of a paste obtained by mixing a pigment, a plasticizer, and optionally, a filler facilitates working. Furthermore, by adding a retardant at the time of mixing the two components, the curing rate can be finely adjusted at the working site.

### «Cured object»

### <Applications>

The curable composition of the present invention can be used in various applications. Examples thereof include, but are not limited to, sealants for construction and industrial uses, such as elastic sealants for construction, sealants for siding boards, sealants for multilayer glass, and sealants for vehicles; materials for electrical and electronic components, such as sealants used for back surfaces of solar cells; electrical insulating materials, such as insulating materials for electric wires and cables; pressure-sensitive adhesives, adhesives, elastic adhesive, contact adhesive, adhesives for tiles, reactive hot melt adhesives, paint, powdered paint, coating materials, foams, sealants for can lids and the like, potting materials for electrical and electronic use, films, gaskets, casting materials, various molding materials, artificial marble, sealants used for rustproofing and water-proofing of edges (cut sections) of wire glass and laminated glass, vibration-proof, damping, soundproof, and earthquake-proof materials used for automobiles, ships and vessels, home electric appliance, etc., liquid sealants used for automobile parts, electrical parts, various types of mechanical parts, etc., and waterproof agents.

Furthermore, molded objects obtained from the curable compositions of the present invention, which exhibit rubber elasticity, can be used mainly for gaskets and packings in various fields. In the automobile field, examples of possible uses are, as body components, sealants for hermetic sealing, vibration proof materials for glass, vibration proof materials for car bodies, and in particular, window seal gaskets and gaskets for door glass; as chassis components, engine and suspension rubber for vibration and sound isolation, and in particular, engine mount rubber; and as engine components, hoses for cooling, fuel supply, exhaust emission control, etc., and sealants for engine oil. The molded objects can also be used for exhaust gas cleaner parts, brake parts, etc. In the home electric appliance field, the molded objects can be used as packings, O-rings, and belts. Specific examples are ornaments, waterproof packings, vibration-proof rubber, and insect-proof packings for lighting equipment; vibration-proof and sound absorbing materials and air seals for cleaners; drip-proof covers, waterproof packings, heater packings, electrode packings, and safety valve diaphragms for electric hot-water generators; hoses, waterproof packings, and solenoid valves for sake warmers; waterproof packings, feed-water tank packings, suction valves, water catch packings, connecting hoses, belts, heater packings, steam blowout hole seals, etc., for steam ovens and rice cookers with automatic keep warm features; oil packings, O-rings, drain packings, pressure tubes, blast tubes, inlet/outlet packings, vibration-proof rubber, fuel inlet packings, fuel gauge packings, oil feed tubes, diaphragm valves, air feed tubes, etc., for burners; and speaker gaskets, speaker edges, turntable sheets, belts, pulleys, etc., for audio equipment. In the architectural field, the molded objects can be used as structural gaskets (zipper gaskets), materials for air dome structures, waterproof materials, molded sealants, vibration proof materials, soundproof materials, setting blocks, slider materials, etc. In the sports field, examples of possible uses are all-weather pavement materials, gymnasium floor materials, etc., for sports floors; sole materials, inner sole materials, etc., and for sports shoes; and balls used in ball games, such as golf balls. In the vibration-proof rubber field, the molded objects can be used as vibration-proof rubber for automobiles, vibration-proof rubber for railroad vehicles, vibration-proof rubber for airplanes, fenders, etc. In the marine engineering fields, examples of possible uses are, as structural materials, rubber expansion joints, supports, water stops, waterproof sheets, rubber dams, elastic pavement materials, vibration-proof pads, fenders, etc.; as submaterials for engineering work, rubber mold forms, rubber packers, rubber skirts, sponge mats, mortar hoses, mortar strainers, etc.; as auxiliary materials for engineering work, rubber sheets, air hoses, etc.; as products for safety, rubber buoys, wave absorbers, etc.; and as products for environmental protection, oil fences, silt fences, stainproofing materials, marine hoses, dredging hoses, oil skimmers, etc. The molded objects can also be used as plate rubber, mats, foam plates, and the like.

The curable compositions of the present invention are particularly useful as sealants and adhesives, and in particular, in the application that requires weatherability and heat resistance and in the application that requires transparency. Furthermore, the curable compositions of the present invention can be used in methods of bonding external tiles without filling joints because of excellent weatherability and adhesion.

### [Examples]

Examples of the present invention together with comparative examples will be described below. However, the invention is not limited to the examples.

In the following examples and comparative examples, "part(s)" and "%" mean "part(s) by weight" and "% by weight", respectively.

In the following examples, the "number-average molecular weight" and the "molecular-weight distribution (ratio of weight-average molecular weight to number-average molecular weight)" was calculated on the basis of a polystyrene standard sample using gel permeation chromatography (GPC). In the GPC, a GPC column packed with crosslinked polystyrene gel (shodex GPC K-804; manufactured by Showa Denko K.K.) was used, and chloroform was used as a GPC solvent.

### (Production Example 1)

A 250-L reactor equipped with an agitator and a jacket was charged with CuBr (1.11 kg), and the reactor was nitrogen-purged. Acetonitrile (5.0 kg) was added thereto, warm water was flowed in the jacket, and stirring was performed at 70°C for 15 minutes. A mixture of butyl acrylate (6.6 kg), ethyl acrylate (9.5 kg), methoxyethyl acrylate (7.8 kg), diethyl 2,5-dibromoadipate (3.09 kg), and acetonitrile (5.0 kg) was added thereto, and stirring was further performed at 70°C for about 30 minutes. Pentamethyldiethylenetriamine (hereinafter referred to as "triamine") was added thereto to initiate reaction. During the reaction, triamine was added to the reaction mixture as appropriate, and polymerization was carried out at an internal temperature of about 70°C to 80°C. The total amount of triamine used in the polymerization step was 45 g. After 4 hours from the initiation of the reaction, unreacted monomers and acetonitrile were distilled off by stirring and heating at 80°C under reduced pressure. Acetonitrile (29.9 kg), 1,7-octadiene (28.4 kg), and triamine (446 g) were added to the concentrate, and stirring was continued for 6 hours. The mixture was stirred at 80°C under reduced pressure to distill off acetonitrile and unreacted 1,7-octadiene, and concentration was performed. Toluene (120 kg) was added to the concentrate to dissolve the polymer. Solid copper in the polymer mixture was filtered off,with a bag filter (manufactured by HAYWARD, filter cloth nominal hole diameter: 1 µm). To the filtrate was added Kyowaad 500SH (manufactured by Kyowa Chemical; 2 parts by weight relative to 100 parts by weight of the polymer) and Kyowaad 700SL (manufactured by Kyowa Chemical; 2 parts by weight relative to 100 parts by weight of the polymer), and stirring was performed in a mixed gas atmosphere of oxygen and nitrogen (oxygen concentration 6%) at 120°C for 2 hours. Insolubles in the mixture were filtered off. The filtrate was concentrated, and a polymer was thereby obtained. The Br group was eliminated by vaporization from the polymer by heating the polymer at 180°C for 12 hours (at a reduced pressure of 10 Torr or less).

To the polymer was added toluene (100 parts by weight relative to 100 parts by weight of the polymer), Kyowaad 500SH (manufactured by Kyowa Chemical; 2 parts by weight relative to 100 parts by weight of the polymer), Kyowaad 700SL (manufactured by Kyowa Chemical; 2 parts by weight relative to 100 parts by weight of the polymer), and a hindered phenol antioxidant (Irganox 1010; Ciba Specialty Chemicals; 0.05 parts by weight relative to 100 parts by weight of the polymer), and stirring was performed in a mixed gas atmosphere of oxygen and nitrogen (oxygen concentration 6%) at 130°C for 4 hours. Insolubles in the mixture were filtered off. By concentrating the filtrate, an alkenyl group-terminated vinyl polymer [P1], i.e., alkenyl-terminated poly(butyl acrylate, ethyl acrylate, methoxyethyl acrylate) polymer, was obtained.

The number-average molecular weight of the polymer [P1] was 18,000, and the molecular-weight distribution was 1.1. The average number of alkenyl groups introduced into the polymer per molecule determined by ¹H NMR analysis was 1.9.

A 140-L pressure-resistant reactor equipped with an agitator and a jacket was charged with the polymer [P1] (76 kg), dimethoxymethylhydrosilane (1.9 kg), methyl orthoformate (0.94 kg), and a xylene solution of zero-valent platinum complex with 1,1,3,3-tetramethyl-1,3-divinyldisiloxane (10 mg as platinum relative to 1 kg of the polymer). The mixture was stirred in a nitrogen atmosphere at 100°C for 2 hours. Volatile portions in the mixture were removed by distillation under reduced pressure. A silyl group-terminated vinyl polymer (polymer [P2]) was thereby obtained. The number-average molecular weight of the resulting polymer was about 20,000, and the molecular-weight distribution was 1.3. The average number of silyl groups introduced into the polymer per molecule determined by ¹H NMR analysis was 2.0. Furthermore, the glass transition temperature (Tg) determined with a differential scanning calorimeter was -54°C. The polymer was liquid with fluidity at 23°C.

### (Production Example 2)

Under a nitrogen atmosphere, a mixed solution of 210 g of methyl methacrylate, 19 g of butyl acrylate, 42 g of stearyl methacrylate, 17 g of y-methacryloxypropylmethyldimethoxysilane, 23 g of γ-mercaptopropylmethyldimethoxysilane, 9 g of 2,2'-azobis(2-methylbutyronitrile), and 62 g of toluene was prepared and dripped into 150 g of toluene maintained at a temperature of 100°C to 110°C to perform polymerization. As a result, a toluene solution of a vinyl polymer [P3] having crosslinkable silyl groups in the molecule with a number-average molecular weight of about 2,100 was obtained.

### (Preparation Example 1)

The polymer [P2] obtained in Production Example 1 and the toluene solution of the polymer [P3] obtained in Production Example 2 were mixed so that the solid content ratio was 50 parts by weight:50 parts by weight. Toluene was then removed by heating under reduced pressure to prepare [polymer mixture 1]. The glass transition temperature (Tg) of the [polymer mixture 1] determined with a differential scanning calorimeter was 75°C, and at 23°C, the polymer was solid without fluidity.

### (Preparation Example 2)

The polymer [P2] obtained in Production Example 1 and the toluene solution of the polymer [P3] obtained in Production Example 2 were mixed so that the solid content ratio was 30 parts by weight:70 parts by weight. Toluene was then removed by heating under reduced pressure to prepare [polymer mixture 2].

### (Example 1)

To 100 parts by weight of [polymer mixture 1], 1 part of weight of a curing catalyst (tetravalent tin; Neostann U-220; manufactured by Nitto Kasei Co., Ltd.) was added, and stirring was performed thoroughly. The resulting mixture was poured into a mold, defoamed, and was cured by allowing it to stand at 23°C for three days and at 50°C for three days. Thereby, a cured sheet of about 2 mm was produced. A dumbbell sample (shape No. 2(1/3)) was obtained by punching the cured sheet after curing, and tensile properties were evaluated (using an Autograph manufactured by Shimadzu Corp.; measurement temperature: 23°C; tensile testing speed: 200 mm/sec).

### (Example 2)

A cured sheet was produced as in Example 1 except that the same amount of [polymer mixture 2] was used instead of [polymer mixture 1], and tensile properties were evaluated.

### (Example 3)

To 100 parts by weight of [polymer mixture 1], 10 parts by weight of carbon black (#60UG; manufactured by Asahi Carbon) was added, and stirring was performed thoroughly, followed by thorough mixing with a three-roll paint mill. A curing catalyst (tetravalent tin; Neostann U-100; manufactured by Nitto Kasei Co., Ltd.) in an amount of 1 part by weight was added to the mixture, and stirring was performed thoroughly. The resulting mixture was cured by allowing it to stand at 23°C for three days and at 50°C for three days. A cured sheet as in Example 1 was produced, and tensile properties were evaluated.

### (Example 4)

A cured sheet was produced as in Example 3 except that 5 parts by weight of Aerosil (R974: manufactured by Japan Aerosil Co., Ltd.) was used instead of carbon black, and tensile properties were evaluated.

### (Comparative Example 1)

A cured sheet was produced as in Example 1 except that the same amount of polymer [P2] was used instead of [polymer mixture 1], and tensile properties were evaluated.

### (Comparative Example 2)

An attempt was made to produce a cured sheet as in Example 1 except that the same amount of polymer [P3] was used instead of [polymer mixture 1]. However, the viscosity was so high that it was not possible to produce the intended cured sheet. Furthermore, the resulting cured object was very hard and brittle.

### (Production Example 3)

A polymer [P4] was obtained as in Production Example 1, the polymer [P4] having a number-average molecular weight of 18,000 and a molecular weight distribution of 1.2. The average number of silyl groups introduced into the polymer per molecule determined by ¹H NMR analysis was 1.9.

### (Preparation Example 3)

The polymer [P4] obtained in Production Example 3 and the toluene solution of the polymer [P3] obtained in Production Example 2 were mixed so that the solid content ratio was 50 parts by weight:50 parts by weight. Toluene was then removed by heating under reduced pressure to prepare [polymer mixture 3].

### (Preparation Example 4)

The polymer [P4] obtained in Production Example 3 and the toluene solution of the polymer [P3] obtained in Production Example 2 were mixed so that the solid content ratio was 70 parts by weight:30 parts by weight. Toluene was then removed by heating under reduced pressure to prepare [polymer mixture 4].

### (Example 5)

To 100 parts by weight of [polymer mixture 3], 1 part of weight of a curing catalyst (tetravalent tin; #918; manufactured by Sankyo Organic Chemicals Co., Ltd.), 1 part by weight of an adhesion-imparting agent (A-1122···N-(β-aminoethyl)-γ-aminopropyltrimethoxysilane; manufactured by Nippon Unicar Co., Ltd.), and 0.5 parts by weight of water were added, and stirring was performed thoroughly. The resulting mixture was poured into a mold, defoamed, and was cured by allowing it to stand at 23°C for three days and at 50°C for three days. Thereby, a cured sheet of about 2 mm was produced. A dumbbell sample (shape No. 3) was obtained by punching the cured sheet after curing, and tensile properties were evaluated (using an Autograph manufactured by Shimadzu Corp.; measurement temperature: 23°C; tensile testing speed: 200 mm/sec).

### (Example 6)

A cured sheet of about 2 mm was produced as in Example 5 except that the same amount of [polymer mixture 4] was used instead of [polymer mixture 3]. A dumbbell sample (shape No. 3) was obtained by punching the cured sheet after curing, and tensile properties were evaluated (using an Autograph manufactured by Shimadzu Corp.; measurement temperature: 23°C; tensile testing speed: 200 mm/sec).

### (Comparative Example 3)

A cured sheet was produced as in Example 5 except that the same amount of polymer [P4] was used instead of [polymer mixture 3], the similar dumbbell sample was obtained by punching, and tensile properties were evaluated.

The respective evaluation results are shown in Table 1 below. In the table, "Tb" indicates strength at break, and "Eb" indicates elongation at break.

**Table-1**

| Tensile properties | Tb (MPa) | Eb (%) |
|---|---|---|
| Example 1 | 5.9 | 240 |
| Example 2 | 7.4 | 120 |
| Example 3 | 8.1 | 230 |
| Example 4 | 6.1 | 190 |
| Example 5 | 3.2 | 200 |
| Example 6 | 1.2 | 200 |
| Comparative Example 1 | 0.3 | 180 |
| Comparative Example 2 | - | - |
| Comparative Example 3 | 0.4 | 90 |

### (Example 7)

At the time when the curable composition obtained in Example 5 was poured into a mold, a test piece for shear test in accordance with JIS K 6850 and a test piece for T-peel test in accordance with JIS K 6854 were also formed respectively, and tensile strength was measured. The test pieces were prepared by applying the curable composition to degreased aluminum adherends (2 mm thick for shear test and 0.1 mm thick for T-peel test, both 25 mm wide), at a tape thickness (about 100 µm), and curing was performed by allowing them to stand at 23°C for three days and at 50°C for three days. Testing was performed under the same conditions as those in Examples 1 to 6. However, the tensile shear test was performed at a tensile testing speed of 50 mm/sec.

### (Example 8)

Measurement was carried out as in Example 7 except that the same amount of [polymer mixture 4] was used instead of [polymer mixture 3].

### (Comparative Example 4)

Measurement was carried out as in Example 7 except that the same amount of polymer [P4] was used instead of [polymer mixture 3].

The respective results are shown in Table 2 below.

**[TABLE 2]**

| Tensile properties | T-peel strength (N/25 mm) | Tensile shear strength (N/cm²) |
|---|---|---|
| Example 7 | 17.0 | 540 |
| Example 8 | 20.1 | 400 |
| Comparative Example 4 | 11.3 | 230 |

In the cured objects in Examples, not only the dumbbell tensile properties, but also the tensile shear strength and the T-peel strength are remarkably improved, showing the satisfactory results.

### (Example 9)

The oil resistance of the cured object obtained in Example 5 was evaluated in accordance with JIS K 6258. After the cured objects were immersed in two types of oil (ASTM No. 1 and IRM903), respectively, at 150°C for 70 hours, increases in mass relative to the initial value (%) were measured.

### (Example 10)

Measurement was carried out as in Example 9 except that the same amount of [polymer mixture 4] was used instead of [polymer mixture 3].

The respective results are shown in Table 3.

**[TABLE 3]**

| Oil resistance (%) | ASTM No. 1 oil | IRM 903 oil |
|---|---|---|
| Example 9 | +2 | +15 |
| Example 10 | +1 | +16 |

All of the cured objects exhibited satisfactory oil resistance.

### Industrial Applicability

The present invention relates to a curable composition containing the following two components: a vinyl polymer (I) which has at least one crosslinkable silyl group and whose main chain is produced by living radical polymerization and a vinyl polymer (II) which has a crosslinkable silyl group and whose main chain is produced by free radical polymerization; and a curable composition containing the following two components: a vinyl polymer (III) which has a crosslinkable silyl group and exhibits a glass transition temperature of less than 23°C as determined with a differential scanning calorimeter (DSC) and a vinyl polymer (IV) which has a crosslinkable silyl group and exhibits a glass transition temperature of 23°C or more as determined with a differential scanning calorimeter. The curable compositions have excellent heat resistance and weatherability and exhibit high strength while maintaining rubber elasticity.

## Claims

1. A curable composition comprising the following two components:
a vinyl polymer (I) which has at least one crosslinkable silyl group and whose main chain is produced by living radical polymerization; and
a vinyl polymer (II) which has a crosslinkable silyl group and whose main chain is produced by free radical polymerization,
wherein the weight ratio between the vinyl polymer (I) and the vinyl polymer (II) is 1:99 to 99:1.

2. The curable composition according to Claim 1, wherein the vinyl polymer (I) has a molecular weight distribution of less than 1.8.

3. The curable composition according to Claim 1 or 2, wherein the main chain of the vinyl polymer (I) is produced by polymerizing a monomer selected from the group consisting of (meth)acrylic monomers, acrylonitrile monomers, aromatic vinyl monomers, fluorine-containing vinyl monomers, and silicon-containing vinyl monomers.

4. The curable composition according to Claim 3, wherein the main chain of the vinyl polymer (I) is a (meth)acrylic polymer.

5. The curable composition according to Claim 4, wherein the main chain of the vinyl polymer (I) is an acrylic polymer.

6. The curable composition according to Claim 5, wherein the main chain of the vinyl polymer (I) is an acrylate polymer.

7. The curable composition according to any one of Claims 1 to 6, wherein the living radical polymerization by which the main chain of the vinyl polymer (I) is produced is atom transfer radical polymerization.

8. The curable composition according to Claim 7, wherein the atom transfer radical polymerization is carried out using, as a catalyst, a transition metal complex with an element selected from Groups 7, 8, 9, 10, and 11 of the periodic table as a central metal.

9. The curable composition according to Claim 8, wherein the transition metal complex used as the catalyst is selected from the group consisting of copper complexes, nickel complexes, ruthenium complexes, and iron complexes.

10. The curable composition according to Claim 9, wherein the transition metal complex used as the catalyst is a copper complex.

11. The curable composition according to any one of Claims 1 to 10, wherein the crosslinkable silyl group of the vinyl polymer (I) and the crosslinkable silyl group of the vinyl polymer (II) are the same or different and each are a group represented by general formula (1):
-[Si(R¹)_{2-b}(Y)_{b}O]ₘ-Si(R²)₃₋ₐ(Y)ₐ (1)
wherein R¹ and R² each represent an alkyl group having 1 to 20 carbon atoms, an aryl group having 6 to 20 carbon atoms, an aralkyl group having 7 to 20 carbon atoms, or a triorganosiloxy group represented by (R')₃SiO-(wherein R' represents a monovalent hydrocarbon group having 1 to 20 carbon atoms, and three R's may be the same or different); when two or more R¹s or R²s are present, they may be the same or different; Y represents a hydroxyl group or a hydrolyzable group; when two or more Ys are present, they may be the same or different; a is 0, 1, 2, or 3; b is 0, 1, or 2; m is an integer of 0 to 19; and the relationship a + mb ≥ 1 is satisfied.

12. The curable composition according to any one of Claims 1 to 11, wherein the crosslinkable silyl group of the vinyl polymer (I) is located at an end of the main chain.

13. An adhesive comprising the curable composition according to any one of Claims 1 to 12.

14. A reactive hot melt adhesive comprising the curable composition according to any one of Claims 1 to 12.

15. A sealant comprising the curable composition according to any one of Claims 1 to 12.

16. A liquid gasket comprising the curable composition according to any one of Claims 1 to 12.

## Patentansprüche

1. Härtbare Zusammensetzung, umfassend die folgenden zwei Komponenten:
ein Vinylpolymer (1), welches mindestens eine vernetzbare Silylgruppe aufweist und dessen Hauptkette durch lebende radikalische Polymerisation erzeugt ist, und ein
Vinylpolymer (II), welches eine vernetzbare Silylgruppe aufweist und dessen Hauptkette durch freie radikalische Polymerisation erzeugt ist,
wobei das Gewichtsverhältnis zwischen Vinylpolymer (I) und Vinylpolymer (II) 1:99 bis 99:1 ist.

2. Härtbare Zusammensetzung nach Anspruch 1, wobei das Vinylpolymer (I) eine Molekulargewichtsverteilung von weniger als 1,8 hat.

3. Härtbare Zusammensetzung nach Anspruch 1 oder 2, wobei die Hauptkette des Vinylpolymers (I) durch Polymerisieren eines Monomers erzeugt ist, welches aus der Gruppe bestehend aus (Meth)acrylmonomeren, Acrylnitrilmonomeren, aromatischen Vinylmonomeren, Fluor-enthaltenden Vinylmonomeren und Siliziumenthaltenden Vinylmonomeren ausgewählt ist.

4. Härtbare Zusammensetzung nach Anspruch 3, wobei die Hauptkette des Vinylpolymers (I) ein (Meth)acrylpolymer ist.

5. Härtbare Zusammensetzung nach Anspruch 4, wobei die Hauptkette des Vinylpolymers (I) ein Acrylpolymer ist.

6. Härtbare Zusammensetzung nach Anspruch 5, wobei die Hauptkette des Vinylpolymers (I) ein Acrylatpolymer ist.

7. Härtbare Zusammensetzung nach einem der Ansprüche 1 bis 6, wobei die lebende radikalische Polymerisation, durch welche die Hauptkette des Vinylpolymers (I) erzeugt ist, eine radikalische Polymerisation mit Atomtransfer ist.

8. Härtbare Zusammensetzung nach Anspruch 7, wobei die radikalische Polymerisation mit Atomtransfer unter Verwendung eines Übergangsmetallkomplexes als Katalysator ausgeführt ist, der ein aus den Gruppen 7, 8, 9, 10 und 11 des Periodensystems ausgewähltes Element als ein zentrales Metall hat.

9. Härtbare Zusammensetzung nach Anspruch 8, wobei der als Katalysator benutzte Übergangsmetallkomplex aus der Gruppe bestehend aus Kupferkomplexen, Nickelkomplexen, Rutheniumkomplexen und Eisenkomplexen ausgewählt ist.

10. Härtbare Zusammensetzung nach Anspruch 9, wobei der als Katalysator benutzte Übergangsmetallkomplex ein Kupferkomplex ist.

11. Härtbare Zusammensetzung nach einem der Ansprüche 1 bis 10, wobei die vernetzbare Silylgruppe des Vinylpolymers (I) und die vernetzbare Silylgruppe des Vinylpolymers (II) gleich oder verschieden und jeweils eine Gruppe sind, welche durch die allgemeine Formel (1) dargestellt wird:
-[Si(R¹)_{2-b}(Y)_{b}O]ₘ-Si(R²)₃₋ₐ(Y)ₐ (1)
wobei R¹ und R² jeweils eine Alkylgruppe mit 1 bis 20 Kohlenstoffatomen, eine Arylgruppe mit 6 bis 20 Kohlenstoffatomen, eine Aralkylgruppe mit 7 bis 20 Kohlenstoffatomen oder eine Triorganosiloxylgruppe, welche durch (R')₃SiO-dargestellt wird (wobei R' eine monovalente Kohlenwasserstoffgruppe mit 1 bis 20 Kohlenstoffatomen darstellt, und drei R's gleich oder verschieden sein können) darstellen; wenn zwei oder mehr R¹s oder R²s vorhanden sind, diese gleich oder verschieden sein können; Y eine Hydroxylgruppe oder eine hydrolysierbare Gruppe darstellt; wenn zwei oder mehr Ys vorhanden sind, diese gleich oder verschieden sein können; a 0, 1, 2, oder 3 ist; b 0, 1 oder 2 ist; m eine ganze Zahl von 0 bis 19 ist; und die Beziehung a + mb ≥ 1 erfüllt ist.

12. Härtbare Zusammensetzung nach einem der Ansprüche 1 bis 13, wobei die vernetzbare Silylgruppe des Vinylpolymers (I) an einem Ende der Hauptkette lokalisiert ist.

13. Klebemittel, umfassend die härtbare Zusammensetzung nach einem der Ansprüche 1 bis 12.

14. Reaktiver Heißschmelzkleber, umfassend die härtbare Zusammensetzung nach einem der Ansprüche 1 bis 12.

15. Dichtmittel, umfassend die härtbare Zusammensetzung nach einem der Ansprüche 1 bis 12.

16. Flüssigkeitsdichtung, umfassend die härtbare Zusammensetzung nach einem der Ansprüche 1 bis 12.

## Revendications

1. Composition durcissable comprenant les deux composants suivants :
un polymère vinylique (I) qui a au moins un groupe silyle réticulable et dont la chaîne principale est produite par polymérisation radicalaire vivante ; et
un polymère vinylique (II) qui a un groupe silyle réticulable et dont la chaîne principale est produite par polymérisation radicalaire,
où le rapport en poids entre le polymère vinylique (I) et le polymère vinylique (II) est 1:99 à 99:1.

2. Composition durcissable selon la revendication 1, où le polymère vinylique (I) a une distribution de masse moléculaire inférieure à 1,8.

3. Composition durcissable selon la revendication 1 ou 2, où la chaîne principale du polymère vinylique (I) est produite par polymérisation d'un monomère choisi dans le groupe consistant en les monomères (méth)acryliques, les monomères de type acrylonitrile, les monomères vinyliques aromatiques, les monomères vinyliques contenant du fluor et les monomères vinyliques contenant du silicium.

4. Composition durcissable selon la revendication 3, où la chaîne principale du polymère vinylique (I) est un polymère (méth)acrylique.

5. Composition durcissable selon la revendication 4, où la chaîne principale du polymère vinylique (I) est un polymère acrylique.

6. Composition durcissable selon la revendication 5, où la chaîne principale du polymère vinylique (I) est un polymère d'acrylate.

7. Composition durcissable selon l'une quelconque des revendications 1 à 6, où la polymérisation radicalaire vivante par laquelle la chaîne principale du polymère vinylique (I) est produite est une polymérisation radicalaire à transfert d'atomes.

8. Composition durcissable selon la revendication 7, où la polymérisation radicalaire à transfert d'atomes est conduite en utilisant, comme catalyseur, un complexe de métal de transition avec un élément choisi parmi les groupes 7, 8, 9, 10 et 11 du tableau périodique comme métal central.

9. Composition durcissable selon la revendication 8, où le complexe de métal de transition utilisé comme catalyseur est choisi dans le groupe consistant en les complexes du cuivre, les complexes du nickel, les complexes du ruthénium et les complexes du fer.

10. Composition durcissable selon la revendication 9 où le complexe de métal de transition utilisé comme catalyseur est un complexe du cuivre.

11. Composition durcissable selon l'une quelconque des revendications 1 à 10, où le groupe silyle réticulable du polymère vinylique (I) et le groupe silyle réticulable du polymère vinylique (II) sont identiques ou différents et sont chacun un groupe représenté par la formule générale (1) :
-[Si(R¹)_{2-b}(Y)_{b}O]ₘ-Si(R²)₃₋ₐ(Y)ₐ (1)
où R¹ et R² représentent chacun un groupe alkyle ayant 1 à 20 atomes de carbone, un groupe aryle ayant 6 à 20 atomes de carbone, un groupe aralkyle ayant 7 à 20 atomes de carbone ou un groupe triorganosiloxy représenté par (R')₃SiO- (où R' représente un groupe hydrocarboné monovalent ayant 1 à 20 atomes de carbone et trois R' peuvent être identiques ou différents) ; quand deux ou plusieurs R¹ ou R² sont présents, ils peuvent être identiques ou différents ; Y représente un groupe hydroxyle ou un groupe hydrolysable ; quand deux ou plusieurs Y sont présents, ils peuvent être identiques ou différents ; a est 0, 1, 2 ou 3 ; b est 0, 1 ou 2 ; m est un entier de 0 à 19 ; et la relation a + mb > 1 est satisfaite.

12. Composition durcissable selon l'une quelconque des revendications 1 à 11 où le groupe silyle réticulable du polymère vinylique (I) est situé à une extrémité de la chaîne principale.

13. Adhésif comprenant la composition durcissable selon l'une quelconque des revendications 1 à 12.

14. Adhésif thermofusible réactif comprenant la composition durcissable selon l'une quelconque des revendications 1 à 12.

15. Agent d'étanchéité comprenant la composition durcissable selon l'une quelconque des revendications 1 à 12.

16. Joint liquide comprenant la composition durcissable selon l'une quelconque des revendications 1 à 12.
